# EUROPÄISCHE PATENTSCHRIFT

(11) **EP 3 919 450 B1**
(45) Veröffentlichungstag und Bekanntmachung des Hinweises auf die Patenterteilung: **25.03.2026**
(21) Anmeldenummer: 21177224.9
(22) Anmeldetag: 01.06.2021
(51) Int. Cl.: C03B 23/045, C03B 23/055

(54) **VERFAHREN ZUM HERSTELLEN EINES GLASZEUGES**
METHOD FOR MANUFACTURING GLASSWARE
PROCÉDÉ DE FABRICATION D'UN PRODUIT DE VERRERIE

(30) Priorität: 04.06.2020 DE 102020114886
(43) Veröffentlichungstag der Anmeldung: 08.12.2021
(73) Patentinhaber: Gerresheimer Regensburg GmbH, 93047 Regensburg (DE); Gerresheimer Bünde GmbH, 32257 Bünde (DE)
(72) Erfinder: Acker, Wolfram, 32257 Bünde (DE); Kiener, Richard Martin, 92526 Oberviechtach (DE); Löpp, Vladislav, 32257 Bünde (DE)
(74) Vertreter: Schmid, Nils T.F.

(56) Entgegenhaltungen:
- WO-A1-2019/108705
- CN-A- 112 010 540
- DE-A1- 102012 025 610
- US-A1- 2019 161 383
- US-A1- 2020 148 576

## Beschreibung

Die vorliegende Erfindung betrifft Verfahren und Anlagen zum Herstellen eines insbesondere rotationssymmetrischen Glaszeuges, wie einer Glasspritze, einer Glaskarpule, eines Glasvials oder einer Glasampulle. Ferner betrifft die Erfindung eine Vorrichtung zum Umformen eines drehenden Glasintermediates, insbesondere Glasrohrs, insbesondere zum Einsatz in einer derartigen Anlage und für ein derartiges Verfahren.

Glaszeuge, wie Glasspritzen, Glaskarpulen, Glasvials oder Glasampullen, unterliegen sehr geringen Fertigungstoleranzen, damit zum einen eine hohe Produktqualität sichergestellt werden kann und zum anderen die teilweise genormten Schnittstellen beispielsweise im trichterförmigen Endabschnitt eingehalten werden können. Insbesondere kann für eine zuverlässige Befestigung eines Kunststoffbauteils an einem Glaszeug eine Formgenauigkeit der Endkontur von 0,03 mm erforderlich sein. Insbesondere für die Realisierung einer automatischen Montage von Kunststoffbauteilen an Glaszeugen kann eine Formgenauigkeit der Endkontur von 0,03 mm erforderlich sein.

Für die Herstellung von Glaszeugen ist es bekannt, Glasintermediate auf Temperaturen oberhalb der Transformationstemperatur zu erwärmen, in Rotation zu versetzen und durch Andrücken einer Formrolle an die Glasintermediatoberfläche zu dem Glaszeug umzuformen. Der dabei zwischen Glasintermediatoberfläche und Formrolle gebildete Kontakt kann insbesondere als Formabrollkontakt bezeichnet werden. Zur Herstellung von Glaszeugen insbesondere mit komplexen Geometrien ist es bekannt, die Umformung in mehreren Schritten durchzuführen. Beispielsweise können unterschiedliche Formrollen eingesetzt werden und zwischen dem Einsatz der unterschiedlichen Formrollen die Glasintermediate abgekühlt und/oder erneut erwärmt werden.

DE 10 2009 031 689 A1 beschreibt, dass sich die Umformung in mehreren Schritten negativ auf die Formgenauigkeit der Glaszeuge auswirkt und schlägt daher vor, Formrollen mit in Umfangsrichtung variablem Durchmesser einzusetzen, um Glasintermediate in einem einzigen Schritt zu Glaszeugen umformen zu können. Hierbei wird vorgeschlagen die Formrollen entweder frei drehbar auszugestalten, sodass diese durch die Reibung mit dem Glasintermediat im Deformationskontakt gedreht werden, oder über separate Motoren anzutreiben. Bei dem Antrieb der Formrollen über separate Motoren wird vorgeschlagen, die Formrollen langsamer zu drehen als das Glasintermediat, sodass jeder Punkt auf den Formrollen im Formabrollkontakt mehrfachen Kontakt zum Glasintermediat hat. Dadurch soll ein Effekt ähnlich einem Töpferprozess erzielt werden.

Es hat sich jedoch herausgestellt, dass die nicht angetriebene Ausführungsform aus DE 10 2009 031 689 A1 nicht zu zufriedenstellenden Formgenauigkeiten, insbesondere nicht zu Formgenauigkeiten der Endkontur von 0,03 mm, führt und die angetriebene Ausführungsform insbesondere zu große Taktzeiten, einen hohen Schmiermittelbedarf, aufwendige Anlagentechnologie und eine aufwendige Prozessführung erfordert. WO2019108705A1 beschreibt einen Glasrohr-Formungsprozess, bei dem ISO 2R-Vials aus einem Glasrohr mit einem Außendurchmesser von 16,75 mm und einer Wandstärke von 1,1 mm bei einer Umsetzgeschwindigkeit von 31 ppm hergestellt werden. Das Rohr wird durch einen Konverter mit mehreren Stationen verarbeitet, darunter Heiz-, Form- und Trennstationen. Während des Prozesses kann das proximale Ende des Rohrs insbesondere an den Heizstationen nach dem Durchstechen einem Unterdruck oder einer Absaugung ausgesetzt werden, um Luft zu entfernen und die Oberflächenalkali-Kontamination (SHR) zu reduzieren.

Bei der nicht angetriebenen Ausführungsform scheint insbesondere die große Relativgeschwindigkeit zwischen der Formrolle und dem Glasintermediat zu Beginn der Umformung die Formgenauigkeit negativ zu beeinträchtigen. Darüber hinaus beeinträchtigen Trägheit, Verschleiß und Verschmutzungen der frei drehenden Formrolle die Formgebung. Insbesondere ist bei der frei drehbaren Ausgestaltung die Reproduzierbarkeit der Umfangsgeschwindigkeit der Formrolle abhängig von dem Zustand der Formrolle und dessen Lagerung. So kann beispielsweise Verschleiß an der Formrollenlagerung und/oder Schwankungen in der Schmierung das Drehverhalten der Formrolle und somit die Formgenauigkeit des Glaszeuges beeinträchtigen. Ferner führt die Trägheit der Formrolle zu Beginn des Umformprozesses zu hohen Relativgeschwindigkeiten zwischen Formrolle und Glasintermediat, was zu einem Verdrehen des Glasintermediates und dadurch zu einer niedrigen Formgenauigkeit des Glaszeuges führen kann.

Bei der angetriebenen Ausführungsform sind Taktzeiten von etwa 5 Sekunden erforderlich, was die Wirtschaftlichkeit der erzeugten Glaszeugen beeinträchtigt. Es hat sich herausgestellt, dass diese Taktzeiten auch nicht signifikant reduziert werden können, da dies bei der vorgeschlagenen Lösung mit Formrollen mit variablem Durchmesser zu einer Beeinträchtigung der Formgenauigkeit führt. Ferner ist die Herstellung der komplexen Geometrie der Formrollen kostenaufwendig. Darüber hinaus führt die große Kontaktfläche zwischen den Formrollen und dem Glasintermediat zu einem hohen Schmiermittelbedarf. Ferner hat sich die Prozessführung, insbesondere die Erwärmung des Glasintermediates und die Schmierung bei der angetriebenen Ausführungsform als sehr aufwendig herausgestellt.

Es ist daher Aufgabe der vorliegenden Erfindung, die Nachteile aus dem bekannten Stand der Technik zu überwinden, insbesondere ein Verfahren, eine Vorrichtung und eine Anlage zur Herstellung eines Glaszeuges mit hoher Formgenauigkeit, insbesondere mit einer Formgenauigkeit von 0,1 mm oder 0,03 mm, und/oder mit kurzen Taktzeiten, insbesondere mit Taktzeiten von maximaler einer Sekunde oder maximal 0,5 Sekunden, bereitzustellen.

Diese Aufgabe wird durch die Merkmale der unabhängigen Ansprüche gelöst.

Gemäß einem ersten Aspekt betrifft die Erfindung ein Verfahren zum Herstellen eines insbesondere rotationssymmetrischen Glaszeuges, wie einer Glasspritze, einer Glaskarpule, eines Glasvials oder einer Glasampulle. Das Verfahren umfasst die Schritte Rotieren eines Glasintermediates, insbesondere Glasrohr, mit einer Aufnahme-Drehzahl um eine Aufnahme-Drehachse, Rotieren wenigstens einer Formrolle mit einer Rollen-Drehzahl um eine Rollen-Drehachse und Verbringen der wenigstens einen Formrolle und des Glasintermediates zum Formgeben in einen Formabrollkontakt, von dem die Aufnahme-Drehachse in Radialrichtung um einen Intermediat-Radius beabstandet ist und von dem die Rollen-Drehachse in Radialrichtung um einen Rollen-Radius beabstandet ist. Das Verhältnis aus Rollen-Drehzahl zu Aufnahme-Drehzahl während dem Verfahren wird in Abhängigkeit von dem Verhältnis aus Intermediat-Radius zu Rollen-Radius gesteuert.

Das Glasintermediat kann insbesondere durch eine Aufnahme um die Aufnahme-Drehachse rotiert werden. Die Aufnahme-Drehachse ist insbesondere die Achse, entlang der sich die Längsachse des Glasintermediates erstreckt, wenn es in der Aufnahme gehalten wird. Das Glasintermediat kann insbesondere drehbar um die Aufnahme-Drehachse der Aufnahme gehalten werden. Insbesondere kann das Glasintermediat derart von der Aufnahme gehalten werden, dass die Drehzahl der Aufnahmedrehachse der Drehzahl des Glasintermediates entspricht. Unter Rotieren ist insbesondere zu verstehen, dass das Glasintermediat in Umfangsrichtung um dessen Längsachse, insbesondere um die Aufnahmedrehachse, rotiert. Unter einem Glasintermediat ist insbesondere ein Glasrohr vorbestimmter Länge zu verstehen. Insbesondere kann das Glasintermediat hohlzylinderförmig sein. Insbesondere wird das Glasintermediat in einem vorgelagerten Schritt durch Abschneiden des Glasintermediates von einem Glasrohr, insbesondere einem Glasrohr mit einer Länge von wenigstens 1 Meter, 2 Meter, 3 Meter oder 4 Meter, bereitgestellt. Insbesondere wird bei der Bereitstellung des Glasintermediates dessen Länge und/oder dessen Wandstärke ermittelt und an eine Steuerung zur Durchführung des Verfahrens weitergeleitet. Insbesondere kann die Länge des Glasintermediates in Abhängigkeit von dessen Wandstärke eingestellt werden, um durch schwankende Wandstärken hervorgerufene Variationen der Masse eines Glasintermediates derart auszugleichen, dass das geformte Glaszeug eine vorbestimmte, insbesondere reproduzierbare, Länge aufweist.

Insbesondere erstreckt sich die Aufnahmedrehachse in der Horizontalen oder ist um weniger als 30 Grad, 15 Grad, zehn Grad, fünf Grad oder ein Grad gegenüber der Horizontalen geneigt.

Insbesondere umfasst das Rotieren von wenigstens einer Formrolle das Rotieren von zwei Formrollen. Die zwei Formrollen erstrecken sich insbesondere entlang von jeweils einer Rollendrehachse. Vorzugsweise erstrecken sich die Rollendrehachsen der zwei Formrollen parallel zueinander oder sind um weniger als 30 Grad, 15 Grad, zehn Grad, fünf Grad oder ein Grad zueinander geneigt. Insbesondere erstreckt sich die wenigstens eine Rollendrehachse entlang der Horizontalen oder ist um weniger als 30 Grad, 15 Grad, zehn Grad, fünf Grad oder ein Grad gegenüber der Horizontalen geneigt. Die Formrolle kann insbesondere rotationssymmetrisch ausgebildet sein.

Insbesondere kann die wenigstens eine Formrolle eine Formfläche für den Formabrollkontakt aufweisen. Insbesondere wird die Formfläche durch einen sich um die Rollendrehachse erstreckenden Rollenmantel ausgebildet. Die Formfläche kann insbesondere zylinderförmig und/oder kegelförmige ausgebildet sein. Wie nachfolgend beschrieben ist, kann das Verfahren zur Herstellung eines rotationssymmetrischen Glaszeuges mehrere Formschritte aufweisen. Vorzugsweise können in jeder der Formschritte jeweils wenigstens eine Formrolle, vorzugsweise zwei Formrollen, mit unterschiedlichen Formfläche eingesetzt werden. Insbesondere kann in dem nachfolgend beschriebenen ersten Formschritt und/oder mittleren Formschritt wenigstens eine Formrolle mit konischer Formfläche verwendet werden. Alternativ oder zusätzlich können in dem nachfolgend beschriebenen letzten Vorformschritt und/oder in dem Endformschritt wenigstens eine Formrolle mit zylindrischer Formfläche verwendet werden.

Insbesondere entspricht die Rollendrehachse der wenigstens einen Formrolle der Längsachse der wenigstens einen Formrolle. Insbesondere ist die wenigstens eine Formrolle rotationssymmetrisch um dessen Längsachse ausgebildet.

Insbesondere erstreckt sich die Rollendrehachse der wenigstens einen Formrolle parallel zu der Aufnahmedrehachse und/oder ist um weniger als 30 Grad, 15 Grad, zehn Grad, fünf Grad oder ein Grad gegenüber der Aufnahmedrehachse geneigt.

Unter Formgeben ist insbesondere die Umformung eines Glasintermediates zu einem Glaszeug zu verstehen. Gemäß dem ersten Aspekt der Erfindung kann die Umformung aus mehreren Formgebungsschritten oder aus einem einzigen Formgebungsschritt bestehen. In der nachfolgend beschriebenen bevorzugten Ausführungsform und gemäß weiteren Aspekten der Erfindung erfolgt die Formgebung jedoch in mehreren Formschritten, insbesondere in vier Formschritten, insbesondere mit jeweils separaten Formrollen und Aufnahmen. Zur Formgebung wird die Formrolle in den Formabrollkontakt mit dem Glasintermediat gebracht. Unter dem Formabrollkontakt ist die Kontaktfläche zwischen der Formrolle und dem Glasintermediat zu verstehen. Insbesondere übt die Formrolle im Formabrollkontakt eine Umformkraft auf das Glasintermediat aus. Die Umformkraft kann insbesondere in Radialrichtung wirken, um das Glasintermediat in Radialrichtung zu verformen. Alternativ oder zusätzlich kann die Umformkraft in Axialrichtung auf das Glasintermediat wirken. Im Formabrollkontakt rollt die Formrolle insbesondere über der Glasoberfläche des Glasintermediates ab. Im Formabrollkontakt dreht sich insbesondere die Formrolle um die Rollen-Drehachse. Insbesondere dreht sich das Glasintermediat im Formabrollkontakt um eine Längsachse, insbesondere Rotationsachse, des Glasintermediates und/oder um die Aufnahme-Drehachse. Insbesondere erstrecken sich die Längsachs des Glasintermediates, insbesondere die Aufnahme-Drehachse, und die Rollen-Drehachse im Formabrollkontakt parallel zueinander.

Insbesondere ist die Formrolle entlang einer Zustellachse verstellbar. Insbesondere kann die Formrolle entlang einer Radial-Zustellachse verstellbar sein. Eine Radial-Zustellachse ist insbesondere eine sich in Radialrichtung erstreckende Zustellachse, insbesondere ein Zustellachse, die sich quer, insbesondere orthogonal und/oder radial, zur Rollen-Drehachse erstreckt. Alternativ oder zusätzlich kann die Formrolle entlang einer Axial-Zustellachse verstellbar sein. Eine Axial-Zustellachse ist insbesondere eine sich in Axialrichtung erstreckende Zustellachse, insbesondere ein Zustellachse, die sich längs, insbesondere parallel, zur Rollen-Drehachse erstreckt. Die translatorische Verstellbarkeit entlang einer Radial-Zustellachse dient insbesondere der Formgebung des Glasintermediates in Radialrichtung. Die translatorische Verstellbarkeit der Formrollen in Axialrichtung dient insbesondere der axialen Zustellung der Formrollen in Abhängigkeit der axialen Position des zu verformenden Bereiches des Glasintermediates. Insbesondere in Abhängigkeit der Dicke des Glasintermediates kann die axiale Position des zu verformenden Bereiches variieren. Insbesondere kann in einem vorgelagerten Schritt insbesondere bei dem Zuschneiden des Glasintermediates dessen Wandstärke ermittelt werden und in Abhängigkeit der Dicke die Länge und/oder axiale Position des zu verformenden Bereiches ermittelt werden. Anschließend kann die Dicke, die Länge und/oder die axiale Position des zu verformenden Bereiches übermittelt werden, sodass die axiale Position der Formrollen entsprechend eingestellt werden kann. Dadurch können insbesondere auch bei variabler Dicke des Glasintermediates Glaszeuge mit hoher Formgenauigkeit hergestellt werden. Diese Berücksichtigung der Variation der Dicke des Glasintermediates kann als Glasmassenkompensation bezeichnet werden.

Das Verfahren kann ferner einen Schritt umfassen, in dem ein Umformdorn translatorisch in das Innere des Glasintermediates verfahren wird, um das Glasintermediat im Formabrollkontakt innenseitig zu formen, während die wenigstens eine Formrolle das Glasintermediat außenseitig formt. Der Umformdorn kann sich insbesondere parallel oder um weniger als 30 Grad, 50 Grad, zehn Grad, fünf Grad oder ein Grad gegenüber der Rollendrehachse und/oder der Aufnahmedrehachse erstrecken. Insbesondere kann der Umformdorn eine der radialen Innenseite des Glasintermediates zugewandte Formfläche aufweisen. Die Formfläche des Umformdorns kann rotationssymmetrisch zur Längsachse des Dorns ausgebildet sein. Insbesondere kann die Formfläche des Umformdorns kegelförmige oder zylinderförmig ausgebildet sein. Insbesondere kann der Umformdorn komplementär zu der Formfläche der wenigstens einen Formrolle in einer Formvorrichtung, insbesondere einer Vorformvorrichtung und/oder eine Endformvorrichtung, ausgebildet sein. Insbesondere wird der Umformdorn radial innenseitig in das Glasintermediat Verfahren bevor die wenigstens eine Formrolle und das Glasintermediat in den Formabrollkontakt verbracht werden.

Das Verbringen des Glasintermediates und der wenigstens einen Formrolle in den Formabrollkontakt kann insbesondere über ein Verfahren der wenigstens einen Formrolle und/oder des Glasintermediates entlang einer Zustellachse erfolgen. Vorzugsweise erfolgt das Verbringen der wenigstens einen Formrolle in den Formabrollkontakt mit dem Glasintermediat durch Verfahren der wenigstens einen Formrolle, insbesondere von zwei Formrollen, entlang der Zustellachse auf die Aufnahmedrehachse zu. Vorzugsweise erstreckt sich die Zustellachse in Radialrichtung zur Aufnahmedrehachse und/oder zur Rollendrehachse.

Insbesondere erfolgt die Steuerung des Verhältnisses aus Rollendrehzahl zu Aufnahmedrehzahl während dem Verfahren mittels einer Steuerung, insbesondere einer Steuereinheit. Unter dem Steuern während dem Verfahren kann eine Steuerung während dem Verbringen der wenigstens einen Formrolle und des Glasintermediat in den Formabrollkontakt, während der nachfolgend beschriebene Verkleinerung des Abstandes zwischen Rollendrehachse und Aufnahmedrehachse in dem Formabrollkontakt, und/oder während des Lösens des Formabrollkontakt zu verstehen sein. Alternativ oder zusätzlich kann unter der Steuerung während dem Verfahren eine Steuerung der Aufnahmedrehzahl und/oder der Rollendrehzahl über mehrere Formschritte hinweg zu verstehen sein.

Durch die Steuerung der Rollendrehzahl und der Aufnahmedrehzahl in Abhängigkeit von dem Verhältnis aus Intermediat-Radius zu Rollen-Radius kann sichergestellt werden, dass eine gewünschte Relativgeschwindigkeit zwischen Intermediat und Formrolle in dem Formabrollkontakt gewährleistet ist. Eine zu hohe Relativgeschwindigkeit kann insbesondere eine geringe Formgenauigkeit, kosmetische Fehler, einen erhöhten Schmiermittelverbrauch und/oder einen erhöhten Verschleiß der Formrollen bewirken. Nichtsdestotrotz kann eine Relativgeschwindigkeit bis zu einem gewissen Maß auch Vorteile bergen, wie die Bereitstellung zusätzlicher Kräfte zur Formgebung des Glasintermediates und/oder die Wärmeeinbringung im Formabrollkontakt. Nichtsdestotrotz gilt es insbesondere eine zu hohe Relativgeschwindigkeit zu vermeiden.

Durch die Verformung des Glasintermediates in Radialrichtung wird der Intermediat-Radius im Formabrollkontakt während dem Verfahren kleiner. Bei gleichbleibender Aufnahmedrehzahl führt dies zu einer reduzierten Umfangsgeschwindigkeit der Oberfläche des Intermediates im Formabrollkontakt. Dabei können beispielsweise Verkleinerungen des Intermediat-Radius von einem Anfangsradius auf einen Endradius um 66 Prozent vorkommen, wie beispielsweise bei einer Verkleinerung von zwölf Millimeter auf vier Millimeter. Eine derartige Verkleinerung führt beispielsweise zu einer Reduzierung der Umfangsgeschwindigkeit vom Anfangsradius zum Endradius von 66 Prozent, wie beispielsweise bei einer Verkleinerung der Umfangsgeschwindigkeit von 450 Millimeter pro Sekunde auf 150 Millimeter pro Sekunde. Bei gleichbleibender Rollendrehzahl, Aufnahmedrehzahl und Rollenradius kann dies zu einer signifikanten Steigerung der Relativgeschwindigkeit im Formabrollkontakt führen. Mit der erfindungsgemäßen Maßnahme kann die Relativgeschwindigkeit auch bei starken Verformungen des Glasintermediates in einem gewünschten Bereich eingestellt werden. Insbesondere können zu hohe Relativgeschwindigkeiten vermieden werden.

In einer Ausführungsform wird der Intermediat-Radius im Formabrollkontakt durch Verkleinerung des Abstandes zwischen Rollendrehachse und Aufnahmedrehachse von einem Anfangsradius auf einen Endradius verkleinert. Insbesondere wird die Rollendrehzahl während der Verkleinerung vom Anfangsradius zum Endradius verkleinert. Alternativ oder zusätzlich wird das Verhältnis aus Rollendrehzahl zu Aufnahmedrehzahl während der Verkleinerung vom Anfangsradius zum Endradius verkleinert, insbesondere proportional zum Intermediat-Radius verkleinert. Vorzugsweise bleibt die Aufnahmedrehzahl während der Verkleinerung vom Anfangsradius zum Endradius konstant. Ferner bleibt bevorzugt der Rollenradius während der Verkleinerung vom Anfangsradius zum Endradius konstant. Demnach wird bevorzugt die Verkleinerung des Intermediat-Radius durch die Verkleinerung der Rollendrehzahl kompensiert, um die Relativgeschwindigkeit zwischen dem Glasintermediat und der wenigstens einen Formrolle im Formabrollkontakt möglichst konstant zu halten.

Unter dem Anfangsradius ist insbesondere der Radius des Intermediates zu dem Zeitpunkt zu verstehen, zu dem die Formrolle in Kontakt mit dem Intermediat tritt. Dabei ist unter dem Anfangsradius der Radius an der axialen Kontaktstelle des Intermediates zu verstehen, mit dem die Formrolle zuerst in Kontakt tritt. Insbesondere bei konisch geformten Formrollen können beim weiteren Verfahren der Formrolle in Radialrichtung weitere Kontaktstellen zwischen Formrolle und Intermediat entstehen. Unter dem Anfangsradius ist jedoch bevorzugt der Anfangsradius an der ersten Kontaktstelle zu verstehen. Während der Verkleinerung des Abstandes zwischen der wenigstens einen Formrolle und dem Glasintermediat wird der Intermediat-Radius verkleinert. Unter dem Endradius ist insbesondere der Intermediates Radius zu verstehen, den das Intermediat auf axialer Höhe der ersten Kontaktstelle aufweist, nachdem der Abstand zwischen Rollendrehachse und Aufnahmedrehachse auf einen Endabstand in einem Formschritt verkleinert wurde. Unter einem Formschritt kann insbesondere der nachfolgend beschriebene wenigstens eine Vorformschritt und/oder Endformschritt zu verstehen sein.

Vorzugsweise erfolgt die Verkleinerung des Abstandes zwischen Rollendrehachse und Aufnahmedrehachse durch Verfahren des Glasintermediat und der wenigstens einen Formrolle relativ zueinander entlang der Zustellachse.

Der Abstand zwischen der Rollendrehachse und Aufnahmedrehachse kann in einem Formschritt insbesondere um wenigstens zwei Millimeter, vier Millimeter, sechs Millimeter, acht Millimeter oder zehn Millimeter verkleinert werden. Insbesondere entspricht die Verkleinerung des Abstandes zwischen der Aufnahmedrehachse und der Rollendrehachse der Verkleinerung des Intermediat-Radius.

Bevorzugt wird die Rollendrehzahl während der Verkleinerung vom Anfangsradius zum Endradius verkleinert. Insbesondere wird die Rollendrehzahl proportional zum Intermediat-Radius verkleinert. Unter proportional ist insbesondere zu verstehen, dass eine homogene lineare Zuordnung zwischen dem Intermediat-Radius und der Rollendrehzahl mit einem konstanten Proportionalitätsfaktor besteht. Beispielsweise kann die homogene lineare Zuordnung derart sein, dass ein Intermediat-Radius von zwölf Millimetern einer Rollendrehzahl von 150 Umdrehungen pro Minute entspricht und ein Intermediat-Radius von vier Millimetern einer Rollendrehzahl von 50 Umdrehungen pro Minute entspricht. In diesem Fall wäre der Proportionalitätsfaktor 12,5 Umdrehungen pro Minute pro Zentimeter.

Insbesondere wird die Rollendrehzahl zeitgleich mit dem Rollenradius verkleinert. Unter zeitgleich kann insbesondere eine Anpassung der Rollendrehzahl an den Intermediat-Radius im Millisekundentakt zu verstehen sein. Unter einem Millisekundentakt kann insbesondere ein Takt von einer Millisekunde, drei Millisekunden, fünf Millisekunden, zehn Millisekunden, 20 Millisekunden, 30 Millisekunden, 50 Millisekunden, 100 Millisekunden oder 200 Millisekunden zu verstehen sein.

Wie zuvor beschrieben, wird vorzugsweise die Rollendrehzahl entsprechend der Verkleinerung des Intermediat-Radius verkleinert. Alternativ oder zusätzlich kann die Aufnahmedrehzahl mit kleiner werdendem Intermediat-Radius vergrößert werden, um eine Verkleinerung der Umfangsgeschwindigkeit des Glasintermediat im Formabrollkontakt zu verhindern oder abzuschwächen. Unabhängig davon, ob die Rollendrehzahl verkleinert wird, die Aufnahmedrehzahl vergrößert wird oder beides miteinander kombiniert wird, kommt es insbesondere darauf an, dass das Verhältnis aus Rollendrehzahl zu Aufnahmedrehzahl während der Verkleinerung vom Anfangsradius zum Endradius verkleinert wird. Insbesondere wird das Verhältnis aus Rollendrehzahl zu Aufnahmedrehzahl proportional und/oder zeitgleich zum Intermediat-Radius verkleinert.

Insbesondere wird die Rollendrehzahl während der Verkleinerung vom Anfangsradius zum Endradius um wenigstens 20 Prozent, 40 Prozent oder 60 Prozent verkleinert. Alternativ oder zusätzlich wird der Intermediat-Radius vom Anfangsradius auf den Endradius um wenigstens 20 Prozent, 40 Prozent oder 60 Prozent verkleinert.

In einer Ausführungsform erfolgt die Verkleinerung von dem Anfangsradius auf den Endradius durch Zustellung der wenigstens einen Formrolle in Radialrichtung. Alternativ oder zusätzlich wird die Rollendrehzahl in Abhängigkeit der Radialstellung der wenigstens einen Formrolle eingestellt. Insbesondere wird die wenigstens eine Formrolle entlang der Zustellachse, insbesondere in Radialrichtung zur Aufnahmedrehachse, auf das Intermediat zu gestellt. Insbesondere wird aus dem Zustellweg der wenigstens einen Formrolle in Radialrichtung die Verkleinerung des Intermediat-Radius ermittelt. Hierfür wird insbesondere der Anfangsradius des Glasintermediates vor dem Verbringen des Glasintermediates mit der wenigstens einen Formrolle in den Formabrollkontakt ermittelt. Dies kann insbesondere über Vermessen mittels Sensorik erfolgen oder über Weiterleitung des Endradius von einem vorgelagerten Formschritt, in dem dieser über die axiale Position der Formrolle am Ende des Fortschritts ermittelt wird. Anschließend kann unter Berücksichtigung der Geometrie und/oder Ausrichtung der Formrolle ermittelt werden, in welcher radialen Position die Formrolle den ersten Kontakt mit dem Glasintermediat bildet. Anschließend kann ermittelt werden, wie weit die Formrolle während dem Formschritt über diesen ersten Kontakt hinaus auf die Aufnahmeachse zu verfahren wird. Aus der Differenz kann die Verkleinerung des Glasintermediat in dem Formschritt ermittelt werden. Anschließend kann unter Berücksichtigung der Zustellgeschwindigkeit der Formrolle ermittelt werden, nach welchen Zeiteinheiten, insbesondere Millisekundentakten, der Intermediat-Radius um welchen Betrag verkleinert sein wird. Auf dieser Grundlage kann die Rollendrehzahl der wenigstens einen Formrolle insbesondere im Millisekundentakt zeitlgeich und/oder proportional zum Intermediat-Radius verkleinert werden.

In einer Ausführungsform wird das Verhältnis aus Rollendrehzahl zu Aufnahmedrehzahl derart abhängig vom Verhältnis aus Intermediat-Radius zu Rollenradius gesteuert, dass die Relativgeschwindigkeit zwischen dem Intermediat-Radius und der wenigstens einen Formrolle im Formabrollkontakt höchstens 50 Prozent, 30 Prozent, 20 Prozent, zehn Prozent, fünf Prozent oder ein Prozent der Umfangsgeschwindigkeit der wenigstens einen Formrolle im Formabrollkontakt beträgt. Dies kann insbesondere dadurch gewährleistet werden, dass das Verhältnis von Rollendrehzahl zu Aufnahmedrehzahl im Wesentlichen dem Verhältnis von Intermediat-Radius zu Rollenradius entspricht. Unter im Wesentlichen ist dabei insbesondere eine Abweichung von höchstens 50 Prozent, 30 Prozent, 20 Prozent, zehn Prozent, fünf Prozent oder ein Prozent eines Verhältnisses von eins zu verstehen. Bei einer Abweichung von null Prozent wäre das Verhältnis von Rollendrehzahl zu Aufnahmedrehzahl identisch zu dem Verhältnis von Intermediat-Radius zu Rollenradius. Bei einem derart eingestellten Verfahren läge insbesondere keine Relativgeschwindigkeit zwischen der Formrolle und dem Glasintermediat im Formabrollkontakt vor. Eine Abweichung von höchstens 50 Prozent soll insbesondere bedeuten, dass der Quotient aus beiden Verhältnissen zwischen 0,5 und 1,5 liegen kann, wohingegen eine Abweichung von zehn Prozent bedeuten soll, dass der Quotient aus beiden Verhältnissen zwischen 0,9 und 1,1 liegen kann.

Insbesondere wird das Verhältnis von Rollendrehzahl zu Aufnahmedrehzahl zeitgleich und/oder proportional zum Verhältnis aus Intermediat-Radius zu Rollenradius gesteuert. Insbesondere kann sich die Steuerung auf die Steuerung der Rollendrehzahl und/oder der Aufnahmedrehzahl zwischen verschiedenen Formschritten beziehen und/oder auf die Steuerung innerhalb eines Formschritts, über den die Verkleinerung des Intermediat-Radius ausgeglichen wird.

Insbesondere kann bei der Steuerung der Aufnahmedrehzahl und der Rollendrehzahl neben dem Intermediat-Radius und dem Rollen-Radius auch die Wandstärke des Glasintermediates und/oder die während der Formung zu erzielende Geometrie berücksichtigt werden. Insbesondere kann je nach Wandstärke und beabsichtigter Geometrie eine größere oder kleinere Relativgeschwindigkeit eingestellt werden. Insbesondere kann beispielsweise bei einer Verformung des Glasintermediat mit einer konischen Formrolle die Aufnahmedrehzahl und/oder die Rollendrehzahl derart eingestellt werden, dass die Relativgeschwindigkeit zwischen Formrolle und Glasintermediat im axialen Mittelbereich der Formrolle in etwa null beträgt und in den vom axialen Mittelbereich in Axialrichtung abgehenden Bereiche ansteigt.

Ein zweiter Aspekt der Erfindung betrifft ein Verfahren zum Herstellen eines insbesondere rotationssymmetrischen Glaszeuges, wie einer Glasspritze, einer Glaskarpule, eines Glasvials oder einer Glasampulle. Der zweiter Aspekt der Erfindung kann mit dem ersten Aspekt kombiniert werden und umgekehrt. Das Verfahren umfasst die Schritte Umformen wenigstens eines Glasintermediates, insbesondere Glasrohrs, in wenigstens einem Vorformschritt, in dem das wenigstens eine Glasintermediat zur Formgebung in einem Formabrollkontakt mit wenigstens einer Formrolle um eine Vorformdrehzahl rotiert wird, und Umformen des wenigstens einen Glasintermediates in einem Endformschritt, in dem das wenigstens eine Glasintermediat zur Formgebung in einem Formabrollkontakt mit einer Formrolle um eine Endformdrehzahl rotiert wird. Der wenigstens eine Vorformschritt und/oder der Endformschritt können insbesondere wie im Zusammenhang mit dem ersten Aspekt der Erfindung beschrieben durchgeführt werden. Der wenigstens eine Vorformschritt erfolgt insbesondere durch Formgebung des Glasintermediates mit wenigstens einer Vorformvorrichtung. Der Endformschritt erfolgt insbesondere durch Formgebung des Glasintermediates mit einer gegenüber der wenigstens einen Vorformvorrichtung separaten Endformvorrichtung. Die Endformdrehzahl ist größer oder kleiner als die Vorformdrehzahl. In anderen Worten unterscheidet sich die Vorformdrehzahl von der Endformdrehzahl.

Insbesondere wird das Glasintermediat in dem wenigstens einen Vorformschritt durch Antreiben einer das Glasintermediat haltenden Aufnahme um eine Aufnahmedrehachse rotiert. Nach erfolgter Formgebung in dem wenigstens einen Vorformschritt wird die Aufnahme insbesondere zu der Endformvorrichtung verfahren, wo die Formgebung in dem Endformschritt erfolgt.

Die Erfinder der vorliegenden Erfindung haben herausgefunden, dass zur Erzielung einer größtmöglichen Formgenauigkeit insbesondere in Kombination mit kurzen Taktzeiten ein Rotieren des Glasintermediates mit unterschiedlichen Drehzahlen in unterschiedlichen Formschritten von Vorteil ist. Insbesondere kann die Drehzahl das Glasintermediates in Abhängigkeit der Wandstärke des Glasintermediates, der zu formenden Geometrie des Glasintermediates, beispielsweise einer zylindrischen Form oder einer Kegelform, und/oder des zu formenden Bereiches des Glasintermediates eingestellt werden. Insbesondere kann die Endformdrehzahl sich um 200 Umdrehungen pro Minute bis 1000 Umdrehungen pro Minute, insbesondere um 400 Umdrehungen pro Minute bis 800 Umdrehungen pro Minute oder 500 Umdrehungen pro Minute bis 700 Umdrehungen pro Minute von der Vorformdrehzahl in dem wenigstens einen Vorformschritt unterscheiden.

In einer Ausführungsform ist die Vorformdrehzahl im Formabrollkontakt des wenigstens einen Vorformschritts konstant. Alternativ oder zusätzlich ist die Endformdrehzahl im Formabrollkontakt des Endformschritts konstant. Alternativ oder zusätzlich unterscheidet sich die Vorformdrehzahl im Betrag um wenigstens zehn Prozent, 20 Prozent, 30 Prozent, 50 Prozent, 100 Prozent, 200 Prozent oder 300 Prozent von der Endformdrehzahl. Alternativ oder zusätzlich ist die Endformdrehzahl größer als die Vorformdrehzahl. Insbesondere beträgt die Vorformdrehzahl 20 Prozent bis 90 Prozent, insbesondere 30 Prozent bis 80 Prozent, der Endformdrehzahl. Insbesondere kann die Endformdrehzahl wenigstens 1200 Umdrehungen pro Minute, insbesondere wenigstens 1400 Umdrehungen pro Minute, betragen. Alternativ oder zusätzlich kann die Endformdrehzahl höchstens 2000 Umdrehungen pro Minute, insbesondere höchstens 1700 Umdrehungen pro Minute, betragen. Alternativ oder zusätzlich kann die Vorformdrehzahl wenigstens 300 Umdrehungen pro Minute, insbesondere wenigstens 500 Umdrehungen pro Minute, betragen. Alternativ oder zusätzlich kann die Vorformdrehzahl höchstens 1400 Umdrehungen pro Minute, insbesondere höchstens 1150 Umdrehungen pro Minute, betragen.

Insbesondere bei der Endformdrehzahl hat es sich als bevorzugt herausgestellt, hohe Drehzahlen zu verwenden, um die Formgenauigkeit bei der Ausformung des Glaszeuges zu erhöhen. Dabei kann insbesondere durch die hohe Drehzahl ein erhöhter Wärmeeintrag in das Glasintermediat erzielt werden. Demgegenüber hat es sich bei dem wenigstens einen Vorformschritt, insbesondere bei dem nachfolgend beschriebenen letzten Vorformschritt, als vorteilhaft erwiesen, kleinere Drehzahlen zu verwenden, um ein Aufschleudern des niedrigviskosen Glases während der Vorformung durch zentrifugal Kräfte zu vermeiden.

In einer Ausführungsform weist der wenigstens eine Vorformschritt einen in Fertigungsrichtung ersten Vorformschritt mit einer ersten Vorformdrehzahl und einen in Fertigungsrichtung letzten Vorformschritt mit einer letzten Vorformdrehzahl auf. Insbesondere ist die erste Vorformdrehzahl größer als die letzte Vorformdrehzahl. Insbesondere ist die erste Vorformdrehzahl zehn Prozent bis 30 Prozent, insbesondere 15 Prozent bis 20 Prozent, größer als die letzte Vorformdrehzahl. Alternativ oder zusätzlich beträgt die erste Vorformdrehzahl wenigstens 500 Umdrehungen pro Minute, insbesondere wenigstens 600 Umdrehungen pro Minute. Alternativ oder zusätzlich beträgt die erste Vorformdrehzahl höchstens 900 Umdrehungen pro Minute, insbesondere höchstens 800 Umdrehungen pro Minute. Alternativ oder zusätzlich beträgt die letzte Vorformdrehzahl wenigstens 400 Umdrehungen pro Minute, insbesondere wenigstens 500 Umdrehungen pro Minute. Alternativ oder zusätzlich beträgt die letzte Vorformdrehzahl höchstens 800 Umdrehungen pro Minute, insbesondere höchstens 700 Umdrehungen pro Minute.

Insbesondere wird im ersten Vorformschritt ein insbesondere zylinderförmiges Glasintermediat in einem Umformbereich eingeschnürt, insbesondere kegelförmige eingeschnürt. Hierfür wird im ersten Vorformschritt vorzugsweise wenigstens eine Formrolle und/oder ein Umformdorn mit kegelförmiger Formfläche eingesetzt.

Insbesondere wird im letzten Vorformschritt ein kegelförmig umgeformter Bereich des Glasintermediates begradigt, insbesondere in einen zylinderförmigen Bereich umgeformt. Hierfür wird im letzten Vorformschritt vorzugsweise wenigstens eine Formrolle und/oder ein Umformdorn mit zylinderförmiger Formfläche eingesetzt.

Im Endformschritt wird vorzugsweise der in dem wenigstens einen Vorformschritt umgeformte, insbesondere eingeschnürte, Bereich des Glasintermediates in einen zylinderförmigen Abschnitt umgeformt, insbesondere begradigt. Hierfür wird vorzugsweise wenigstens eine Formrolle und/oder ein Umformdorn mit zylinderförmiger Mantelfläche eingesetzt.

In einer Ausführungsform weist der wenigstens eine Vorformschritt einen in Fertigungsrichtung ersten Vorformschritt mit einer ersten Vorformdrehzahl, einen in Fertigungsrichtung letzten Vorformschritt einer letzten Vorformdrehzahl und einen in Fertigungsrichtung mittleren Vorformschritt mit einer mittleren Vorformdrehzahl auf. Insbesondere ist die erste Vorformdrehzahl kleiner als die mittlere Vorformdrehzahl. Insbesondere beträgt die erste Vorformdrehzahl 40 Prozent bis 90 Prozent, insbesondere 60 Prozent bis 70 Prozent, der mittleren Vorformdrehzahl. Alternativ oder zusätzlich ist die letzte Vorformdrehzahl kleiner als die mittlere Vorformdrehzahl. Insbesondere beträgt die letzte Vorformdrehzahl 30 Prozent bis 80 Prozent, insbesondere 50 Prozent bis 60 Prozent, der mittleren Vorformdrehzahl.

Insbesondere beträgt die mittlere Vorformdrehzahl zwischen 800 Umdrehungen pro Minute und 1300 Umdrehungen pro Minute, insbesondere zwischen 1000 Drehung pro Minute und 1150 Umdrehungen pro Minute.

Insbesondere wird die Wandstärke des Glasintermediates, insbesondere im mittleren Vorformschritt, verkleinert. Insbesondere wird das Glasintermediat in dem mittleren Vorformschritt ausgedünnt. Vorzugsweise wird das Glasintermediat in dem dem mittleren Vorformschritt vorgelagerten Vorformschritt, insbesondere ersten Vorformschritt, in eine Kegelform, insbesondere in ein eingeschnürtes Glasintermediat, umgeformt. Vorzugsweise wird in dem mittleren Vorformschritt das Glasintermediat mittels wenigstens einer Formrolle und/oder eines Formdorns mit kegelförmiger Formfläche umgeformt. Dabei wird insbesondere das Glasintermediat derart in Radialrichtung zwischen dem Umformdorn und der wenigstens einen Formrolle zusammengedrückt, dass die Wandstärke des Glasintermediates sich verkleinert. Insbesondere in dem dem mittleren Vorformschritt nachgelagerten Vorformschritt, insbesondere dem letzten Vorformschritt, wird die Kegelform des Glasintermediates wenigstens teilweise wieder in eine Zylinderform geformt, insbesondere begradigt. Hierfür wird in dem letzten Vorformschritt vorzugsweise wenigstens eine Formrolle und/oder ein Umformdorn mit zylinderförmiger Formfläche eingesetzt.

Besonders bevorzugt umfasst der wenigstens eine Vorformschritt genau drei Vorformschritte, nämlich in Fertigungsrichtung zuerst den ersten Vorformschritt, anschließt den mittleren Vorformschritt und abschließend den letzten Vorformschritt.

In einer Ausführungsform wird der wenigstens eine Vorformschritt in wenigstens einer Vorformvorrichtung und der Endformschritt in einer Endformvorrichtung durchgeführt. Insbesondere wird das wenigstens eine Glasintermediat nach dem wenigstens einen Vorformschritt zu der Endformvorrichtung verfahren. Insbesondere erfolgt das Verfahren des wenigstens eine Glasintermediates mittels einer Zustellvorrichtung, insbesondere durch Drehung eines Karussells. Insbesondere ist die Vorformvorrichtung und/oder die Endformvorrichtung jeweils eine Vorrichtung zum Umformen eines drehenden Glasintermediates insbesondere wie nachfolgend im Zusammenhang mit dem vierten Aspekt der vorliegenden Erfindung beschrieben.

Insbesondere ist das wenigstens eine Glasintermediat drehbar in wenigstens einer Aufnahme gehalten, über die das wenigstens eine Glasintermediat mit einer Aufnahmedrehzahl um eine Aufnahmedrehachse rotiert wird. Insbesondere wird die Vorformdrehzahl in dem wenigstens einen Vorformschritt und die Endformdrehzahl in dem Endformschritt über die Aufnahmedrehzahl der Aufnahme eingestellt. Insbesondere wird das wenigstens eine Glasintermediat vor dem wenigstens einen Vorformschritt zu wenigstens einer Vorformvorrichtung Verfahren. Dort wird insbesondere die Aufnahmedrehzahl auf die Vorformdrehzahl eingestellt. Anschließend erfolgt insbesondere die Umformung durch Verbringen des wenigstens einen Glasintermediates in den Formabrollkontakt mit wenigstens einer Formrolle einer Vorformvorrichtung, wie zuvor beschrieben. Anschließend wird insbesondere der Formabrollkontakt wieder gelöst. Anschließend kann das wenigstens eine Glasintermediat zu der Endformvorrichtung verfahren werden. In der Endformvorrichtung kann die Aufnahmedrehzahl auf die Endformdrehzahl eingestellt. Anschließend erfolgt insbesondere die Umformung durch Verbringen des wenigstens ein Glasintermediates in den Formabrollkontakt mit wenigstens einer Formrolle einer Endformvorrichtung, wie zuvor beschrieben. In Ausführungsform, in denen der wenigstens eine Vorformschritt wenigstens zwei oder drei Vorformschritte aufweist, kann die Aufnahme jeweils nach einem erfolgten Vorformschritt in einer Vorformvorrichtung zu einer in Fertigungsrichtung nachgelagerten Vorformvorrichtung zur Durchführung des nachgelagerten Vorformschritts verfahren werden.

Vorzugsweise sind die wenigstens eine Vorformvorrichtung und die Endformvorrichtung in Umfangsrichtung um eine Karussellachse des Karussells angeordnet, um das wenigstens eine Glasintermediat Durch Drehung des Aufnahmekarussells um die Karussellachse von der wenigstens einen Vorformvorrichtung zu der Endformvorrichtung verfahren zu können.

Die zuvor und nachfolgend beschriebene Vorrichtung zum Umformen eines drehenden Glasintermediates kann auch als Vorformvorrichtung, Endformvorrichtung und/oder Formgebungsvorrichtung bezeichnet werden. Fertigungsrichtungsaufwärts und/oder - abwärts der wenigstens einen Formgebungsvorrichtung kann wenigstens eine Erwärmungsvorrichtung, insbesondere wenigstens ein Brenner, zum Erwärmen des Glasintermediates vorgesehen sein. Insbesondere kann jeweils zwischen zwei Formgebungsvorrichtungen jeweils wenigstens eine Erwärmungsvorrichtung vorgesehen sein und/oder jeweils vor und/oder nach einer Formgebungsvorrichtung jeweils wenigstens eine Erwärmungsvorrichtung vorgesehen sein.

Fertigungsrichtungsaufwärts der wenigstens einen Formgebungsvorrichtung, insbesondere der ersten Vorformvorrichtung, kann eine Prüfvorrichtung vorgesehen sein, um die Position und den Planschlag des Glasintermediates in der Aufnahme zu vermessen.

Fertigungsrichtungsabwärts der wenigstens einen Formgebungsvorrichtung, insbesondere der Endformvorrichtung, und insbesondere einer nachgelagerten Erwärmungsvorrichtung kann eine Kühlvorrichtung zum Abkühlen des Glaszeuges oder des Glasintermediates nach erfolgter Formgebung vorgesehen sein.

Fertigungsrichtungsabwärts der wenigstens einen Formgebungsvorrichtung, insbesondere der Endformvorrichtung und/oder insbesondere der Kühlvorrichtung, kann eine Prüfvorrichtung zum Prüfen der Geometrie des umgeformten Glaszeuges oder Glasintermediates vorgesehen sein. Fertigungsrichtungsabwärts der Prüfvorrichtung kann eine weitere Kühlvorrichtung und darauf folgenden eine weitere Prüfvorrichtung zum Detektieren von Kratzern und/oder Sprüngen im Glaszeug vorgesehen sein. Fertigungsrichtungsabwärts der Prüfvorrichtung zum Detektieren von Kratzern und/oder Sprüngen kann eine weitere Kühlvorrichtung vorgesehen sein. Fertigungsrichtungsabwärts insbesondere dieser Kühlvorrichtung kann eine Übergabevorrichtung zum Übergeben des Glaszeuges zur weiteren Bearbeitung vorgesehen sein. Die Übergabevorrichtung kann insbesondere Mittel zum Auffangen von aus der Aufnahme ausgeworfenen Glaszeugen und/oder zum Transportieren der Glaszeuge zu weiteren Bearbeitungsvorrichtung aufweisen.

Insbesondere kann eine oder mehrere der zuvor beschriebenen Vorrichtungen in Umfangsrichtung um die Karussellachse des Aufnahmekarussells angeordnet sein, um das wenigstens eine Glasintermediat durch Drehen des Karussells zwischen den einzelnen Vorrichtungen zu verfahren.

In einer Ausführungsform umfasst das wenigstens eine Glasintermediat wenigstens zwei, insbesondere wenigstens 4,8, 16 oder 32, Glasintermediate. Insbesondere werden die wenigstens zwei Glasintermediate parallel, insbesondere zeitgleich, an der wenigstens einen Vorformvorrichtung und an der Endformvorrichtung umgeformt. Vorzugsweise umfasst das wenigstens eine Glasintermediat wenigstens drei oder vier Glasintermediate, die jeweils parallel an den wenigstens zwei oder drei Vorformvorrichtungen und der Endformvorrichtung umgeformt werden. Vorzugsweise kann das wenigstens eine Glasintermediat weitere, insbesondere 8, 16 oder 32, Glasintermediate aufweisen. Insbesondere können die Glasintermediate, die nicht in einer Formgebungsvorrichtung umgeformt werden, parallel an einer oder mehrerer der zuvor beschriebenen weiteren Fertigungsvorrichtungen bearbeitet werden. Insbesondere können sämtliche Fertigungsschritte von der Vermessung des Plananschlags des Glasintermediates, über dessen Umformung, bis hin zum Auswurfen oder Übergeben jeweils durch Verfahren von einer das Glasintermediat haltenden Aufnahme zwischen den einzelnen Vorrichtungen abgefahren werden. Insbesondere durch Verwendung von mehreren Aufnahmen, über die jeweils ein Glasintermediat gehalten wird, können mehrere Glasintermediat parallel zu einem Glaszeug umgeformt werden. Dadurch kann insbesondere gewährleistet werden, dass trotz der Vielzahl der erforderlichen Bearbeitungsschritte durch die parallele Bearbeitung mehrerer Glasintermediate jeweils ein Glasintermediat innerhalb der Taktzeit eines Bearbeitungsschrittes bereitgestellt werden kann.

In einer Ausführungsform wird die wenigstens eine Formrolle im Formabrollkontakt in dem wenigstens einen Vorformschritt und in dem Endformschritt jeweils mit einer Rollendrehzahl rotiert, die in Abhängigkeit von der Intermediates Drehzahl und/oder von dem Intermediat-Radius gesteuert wird. Insbesondere kann die Rollendrehzahl bei einer erhöhten Intermediat-Drehzahl erhöht werden und/oder bei einem reduzierten Intermediat-Radius verkleinert werden. Insbesondere wird die Rollendrehzahl in dem wenigstens einen Vorformschritt und/oder dem Endformschritt derart gesteuert, dass das Verhältnis der Umfangsgeschwindigkeit der wenigstens einen Formrolle und des Glasintermediates im Formabrollkontakt sich zwischen dem wenigstens einen Vorformschritt und dem Endformschritt um weniger als 50 Prozent, 30 Prozent, 20 Prozent, zehn Prozent, fünf Prozent oder ein Prozent unterscheiden. Die Steuerung der Rollendrehzahl kann insbesondere auch zwischen den zuvor beschriebenen wenigstens zwei oder drei Vorformschritten erfolgen. Dadurch kann insbesondere gewährleistet werden, dass die Relativgeschwindigkeit zwischen der wenigstens einen Formrolle und dem Glasintermediat sowohl von Formschritt zu Formschritt als auch während eines Formschrittes innerhalb eines vorbestimmten Bereiches bleibt.

In einer Ausführungsform wird die wenigstens eine Formrolle im Formabrollkontakt in dem wenigstens einen Vorformschritt und in dem Endformschritt jeweils mit einer Rollendrehzahl rotiert, wobei sich die Rollendrehzahl in dem wenigstens einen Vorformschritt von der Rollendrehzahl im Endformschritt unterscheidet, insbesondere größer oder kleiner als die Rollendrehzahl im Endformschritt. Insbesondere wird die Rollendrehzahl in dem wenigstens einen Vorformschritt und dem Endformschritt derart abhängig von der jeweiligen Drehzahl des Glasintermediates gesteuert, dass das Verhältnis der Umfangsgeschwindigkeit der wenigstens einen Formrolle und das Glasintermediates im Formabrollkontakt sich zwischen dem wenigstens einen Vorformschritt und dem Endformschritt um weniger als 50 Prozent, 30 Prozent, 20 Prozent, zehn Prozent, fünf Prozent oder ein Prozent unterscheiden.

Ein dritter Aspekt der Erfindung betrifft ein Verfahren zum Herstellen eines insbesondere rotationssymmetrischen Glaszeuges, wie einer Glasspritze, einer Glaskarpule, eines Glasvials oder einer Glasampulle. Das Verfahren gemäß dem dritten Aspekt kann mit dem Verfahren gemäß dem ersten und/oder zweiten Aspekt kombiniert werden und umgekehrt. Das Verfahren umfasst die Schritte Rotieren eines Glasintermediates, insbesondere Glasrohrs, mit einer Aufnahmedrehzahl um eine Aufnahmedrehachse, Rotieren wenigstens einer Formrolle mit einer Rollendrehzahl um eine Rollendrehachse und Verbringen der wenigstens einen Formrolle und des Glasintermediates zum Formgeben in einen Formabrollkontakt. Insbesondere können diese Schritte wie im Zusammenhang mit dem ersten und zweiten Aspekt der vorliegenden Erfindung beschrieben durchgeführt werden. Die Aufnahmedrehzahl und/oder die Rollendrehzahl wird während dem Verfahren über einen Servomotor gesteuert. Insbesondere ermöglicht die Steuerung über einen Servomotor, dass die Aufnahmedrehzahl und/oder die Rollendrehzahl im Millisekundentakt gesteuert werden kann. Dadurch kann insbesondere die Rollendrehzahl und/oder die Aufnahmedrehzahl während eines Formschrittes auch bei kurzen Taktzeiten von 0,5 Sekunden oder von einer Sekunde schnell genug angepasst werden, um zu große Relativgeschwindigkeiten zwischen dem Glasintermediat und der wenigstens einen Formrolle zu vermeiden.

Vorzugsweise wird über den Servomotor die Rollendrehzahl der wenigstens einen Formrolle gesteuert. Vorzugsweise wird die Rollendrehzahl der wenigstens einen Formrolle im Millisekundentakt, insbesondere in einem Takt von einer Millisekunde, drei Millisekunden, fünf Millisekunden, zehn Millisekunde, 20 Millisekunden, 30 Millisekunden, 50 Millisekunden, 100 Millisekunden, 200 Millisekunde oder 300 Millisekunden gesteuert. Besonders bevorzugt umfasst das Verfahren das Rotieren von wenigstens zwei Formrollen in einer Formgebungsvorrichtung. Vorzugsweise wird jede der Formrollen über jeweils einen eigenen Servomotor gesteuert.

Vorzugsweise weist jede der zuvor nachfolgend beschriebenen Formgebungsvorrichtungen jeweils einen eigenen Servomotor pro Formrolle auf, um die Drehzahl jeder Formrolle unabhängig voneinander im Millisekundentakt ändern zu können.

Ein vierter Aspekt der Erfindung betrifft eine Vorrichtung zum Umformen eines drehenden Glasintermediates, insbesondere Glasrohrs. Die Vorrichtung umfasst wenigstens eine Formrolle, die zum Formgeben in einem Formabrollkontakt mit dem Glasintermediat um eine Rollendrehachse drehbar ist. Ferner umfasst die Vorrichtung wenigstens einen Rollenmotor zum Rotieren der wenigstens einen Formrolle um die Rollendrehachse. Der wenigstens eine Rollenmotor ist ein Servomotor. Die Vorrichtung kann insbesondere als Formgebungsvorrichtung bezeichnet werden. Insbesondere können die zuvor und nachfolgend beschriebenen Vorformvorrichtungen und Endformvorrichtungen gemäß der Vorrichtung gemäß dem vierten Aspekt der Erfindung ausgebildet sein. Vorzugsweise umfasst die wenigstens eine Formrolle zwei Formrollen und der wenigstens eine Rollenmotor wenigstens zwei Rollenmotoren. Vorzugsweise sind beide Rollenmotoren Servomotoren. Vorzugsweise ist jeweils ein Rollenmotor mit jeweils einer Formrolle gekoppelt, um die zwei Formrollen unabhängig voneinander antreiben zu können. Vorzugsweise ist der wenigstens eine Rollenmotor derart fest mit der wenigstens einen Formrolle verbunden, dass der Rollenmotor und die Formrolle zusammen in Radialrichtung auf das Glasintermediat zu verstellt werden können, insbesondere entlang einer Zustellachse verstellt werden können.

Die Vorrichtung gemäß dem vierten Aspekt Erfindung kann ausgestaltet sein, um die Verfahren gemäß dem ersten, zweiten und/oder dritten Aspekt der vorliegenden Erfindung durchzuführen. Ferner können die Verfahren gemäß dem ersten, zweiten und/oder dritten Aspekt der Erfindung derart ausgeführt werden, dass sie mit einer Vorrichtung gemäß dem vierten Aspekt Erfindung durchgeführt werden können. Insbesondere kann der wenigstens eine Vorformschritt und/oder der Endformschritt gemäß dem zweiten Aspekt der Erfindung mit einer Vorrichtung gemäß dem vierten Aspekt der Erfindung durchgeführt werden, insbesondere mit jeweils einer eigenen Vorrichtung gemäß dem vierten Aspekt der Erfindung durchgeführt werden.

In einer Ausführungsform ist die Motorabtriebswelle des wenigstens einen Rollenmotors derart mit der wenigstens einen Formrolle gekoppelt, dass die wenigstens eine Formrolle einer Drehbewegung der Motorabtriebswelle direkt folgt. Insbesondere ist die Motorabtriebswelle dafür getriebefrei mit der wenigstens einen Formrolle verbunden. Unter getriebefrei ist in diesem Zusammenhang insbesondere zu verstehen, dass keine Änderung der Drehzahl, des Drehmoments oder der Drehrichtung zwischen der Motorabtriebswelle und der Formrolle erfolgt. Übertragungsmittel, wie beispielsweise eine Klauenkupplung, können jedoch zwischen der Motorabtriebswelle und der Formrolle vorgesehen sein.

In einer Ausführungsform weist die wenigstens eine Formrolle zwei Formrollen auf und der wenigstens eine Rollenmotor zwei Rollenmotoren auf, wobei jeweils ein Rollenmotor mit jeweils einer Formrolle gekoppelt ist, um die Formrollen unabhängig voneinander anzutreiben.

Ein fünfte Aspekt der Erfindung betrifft eine Anlage zum Herstellen eines insbesondere rotationssymmetrischen Glaszeuges, wie einer Glasspritze, einer Glaskarpule, eines Glasvials oder einer Glasampulle. Die Anlage umfasst wenigstens eine Aufnahme zum drehbaren Halten eines Glasintermediates, insbesondere eines Glasrohrs, wenigstens eine Vorrichtung mit wenigstens einer Formrolle, die zum Formgeben in einem Formabrollkontakt dem Glasintermediat um eine Rollendrehachse drehbar ist, und mit wenigstens einem Rollenmotor zum Rotieren der wenigstens einen Formrolle um die Rollendrehachse. Der wenigstens eine Rollenmotor und/oder der wenigstens eine Aufnahmemotor ist ein Servomotor.

Insbesondere kann die Vorrichtung eine Vorrichtung gemäß dem vierten Aspekt der Erfindung sein. Insbesondere kann die Anlage zum Herstellen eines Glaszeuges mit dem Verfahren gemäß dem ersten Aspekt, dem zweiten Aspekt und/oder dem dritten Aspekt Erfindung ausgelegt sein. Insbesondere kann das Verfahren gemäß dem ersten Aspekt, dem zweiten Aspekt und/oder dem dritten Aspekt der Erfindung derart durchgeführt werden, dass es mit der Anlage gemäß dem fünften Aspekt der Erfindung durchgeführt werden kann.

Ein sechster Aspekt der Erfindung betrifft eine Anlage zum Herstellen eines rotationssymmetrischen Glaszeuges, wie einer Glasspritze, einer Glaskarpule, eines Glasvials oder einer Glasampulle. Die Anlage umfasst wenigstens eine Aufnahme zum drehbaren Halten eines Glasintermediates, insbesondere eines Glasrohrs, wenigstens eine Vorformvorrichtung mit wenigstens einer Formrolle zum Formgeben in einem Formabrollkontakt mit dem Glasintermediat, eine Endformvorrichtung mit wenigstens einer Formrolle zum Formgeben in einem Formabrollkontakt mit dem Glasintermediat und eine Zustellvorrichtung zum Verfahren der wenigstens einen Aufnahme von der wenigstens einen Vorformvorrichtung zu der Endformvorrichtung.

Die Anlage gemäß dem sechsten Aspekt der Erfindung kann insbesondere gemäß der Anlage gemäß dem fünften Aspekt der Erfindung ausgebildet sein und umgekehrt. Insbesondere kann die Endformvorrichtung und/oder die wenigstens eine Vorformvorrichtung gemäß der Vorrichtung gemäß dem vierten Aspekt der Erfindung ausgebildet sein. Die Anlage gemäß dem sechsten Aspekt Erfindung kann zum Durchführung des Verfahrens gemäß dem ersten, zweiten und/oder dritten Aspekt der Erfindung ausgelegt sein. Ferner kann das Verfahren gemäß dem ersten, zweiten und/oder dritten Aspekt Erfindung derart durchgeführt werden, dass es mit der Vorrichtung gemäß dem sechsten Aspekt Erfindung durchgeführt werden kann.

Die wenigstens eine Formrolle der wenigstens einen Vorformvorrichtung und/oder der Endformvorrichtung kann wenigstens zwei Formrollen umfassen. Insbesondere kann für jede der Formrollen ein eigener Rollenmotor vorgesehen sein, um die Formrollen unabhängig voneinander antreiben zu können.

In einer Ausführungsform ist die Zustellvorrichtung ein Karussell, um dessen Karussellachse die wenigstens eine Vorformvorrichtung und die Endformvorrichtung angeordnet sind, um die wenigstens eine Aufnahme durch Drehen des Karussells von der wenigstens einen Vorformvorrichtung zu der Endformvorrichtung zu verfahren. Insbesondere kann die wenigstens eine Vorformvorrichtung wenigstens zwei oder drei Vorformvorrichtungen, insbesondere die zuvor beschriebenen Vorformvorrichtungen, aufweisen. Insbesondere sind die wenigstens zwei oder drei Vorformvorrichtungen um die Karussellachse herum angeordnet. Alternativ oder zusätzlich können weitere Fertigungsvorrichtungen, wie die zuvor beschriebene Erwärmungsvorrichtung, Prüfvorrichtung, Abkühlvorrichtung und/oder Übergabevorrichtung um die Karussellachse herum angeordnet sein.

In einer Ausführungsform weist die wenigstens eine Aufnahme wenigstens zwei, insbesondere wenigstens 4, 8, 16 oder 32, Aufnahmen auf, um wenigstens zwei Glasintermediate parallel, insbesondere zeitgleich, an der wenigstens einen Vorformvorrichtung und an der Endformvorrichtung umzuformen. Vorzugsweise weist die wenigstens eine Vorformvorrichtung in Fertigungsrichtung wenigstens eine erste und eine letzte Vorformvorrichtungen auf und die wenigstens eine Aufnahme wenigstens drei Aufnahmen auf, um wenigstens drei Glasintermediat parallel an den wenigstens zwei Vorformvorrichtungen und an der Endformvorrichtung umzuformen. Besonders bevorzugt weist die wenigstens eine Vorformvorrichtung wenigstens eine erste, eine mittlere und eine letzte Vorformvorrichtung auf und die wenigstens eine Aufnahme wenigstens vier Aufnahmen auf, um wenigstens vier Glasintermediat parallel, insbesondere zeitgleich, an den wenigstens drei Vorformvorrichtung und an der Endformvorrichtung umzuformen.

Besonders bevorzugt sind die Endformvorrichtung und/oder die wenigstens eine, zwei oder drei Vorformvorrichtungen derart ausgestaltet, dass die zuvor beschriebenen Verfahren an der Anlage durchgeführt werden können. Besonders bevorzugt ist für jede Bearbeitungsvorrichtung, insbesondere für die wenigstens eine Vorformvorrichtung, die Endformvorrichtung, die wenigstens eine Erwärmungsvorrichtung, die wenigstens eine Abkühlvorrichtung, die wenigstens eine Prüfvorrichtung und/oder die Übergabevorrichtung, eine separate Aufnahme vorgesehen, um an jeder der Vorrichtungen zeitgleich Glasintermediate bearbeiten zu können. Dadurch kann insbesondere die Taktzeit zur Fertigung der Glasintermediat reduziert werden, insbesondere auf die Taktzeit eines einzelnen Fertigungsschritts, wie eines Vorformschritts oder eines Endformschritts, reduziert werden.

in einer Ausführungsform weist die wenigstens eine Aufnahme wenigstens zwei, insbesondere wenigstens 4, 8, 16 oder 32, Aufnahmen auf, die mit jeweils einem eigenen Aufnahmemotor gekoppelt sind, um die Aufnahmen unabhängig voneinander anzutreiben. Dadurch kann insbesondere gewährleistet werden, dass mehrere Glasintermediat parallel an der wenigstens einen Vorformvorrichtung und der Endformvorrichtung mit unterschiedlichen Intermediat-Drehzahlen angetrieben werden können. Dadurch können insbesondere einerseits Taktzeiten reduziert werden und andererseits die Formgenauigkeit erhöht werden, indem die Intermediat-Drehzahl jeweils an die für die einzelnen Formschritte optimale Intermediat-Drehzahl angepasst wird.

Insbesondere kann mit den beschriebenen erfindungsgemäßen Maßnahmen die Herstellung von Glaszeugen mit einer Formgenauigkeit von 0,03 mm in Verbindung mit Taktzeiten von weniger 0,5 Sekunden erzielt werden.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine schematische Teildarstellung einer Anlage zum Herstellen von Glaszeugen gemäß Figur 2;
- Figur 2: eine schematische Darstellung einer Anlage zum Herstellen von Glaszeugen;
- Figur 3: eine Formgebungsvorrichtung mit Gehäuse;
- Figur 4: einen Teil der Formgebungsvorrichtung aus Figur 3 ohne Gehäuse;
- Figur 5: eine vergrößerte Ansicht des Ausschnitts V aus Figur 4;
- Figur 6: eine Ansicht von oben auf ein Karussell mit 26 Aufnahmen;
- Figur 7: eine Querschnittsansicht des Karussells aus Figur 6 entlang der Schnittlinie VII- VII;
- Figur 8: eine vergrößerte Ansicht des Ausschnitts VIII aus Figur 7;
- Figur 9: ein hohlzylinderförmiges Glasintermediat;
- Figur 10: ein eingeschnürtes Glasintermediat;
- Figur 11: ein ausgedünntes Glasintermediat;
- Figur 12: ein begradigtes Glasintermediat; und
- Figur 13: einen Glaskonus.

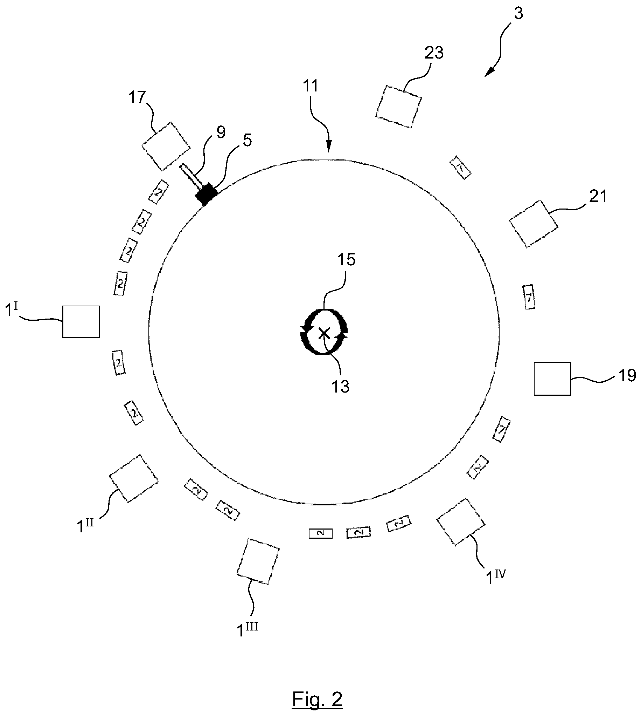

Figur 2 zeigt eine schematische Darstellung einer Anlage 3 zur Herstellung eines Glaszeuges, in der vier Vorrichtungen 1^{I}, 1^{II}, 1^{III}, 1^{IV} zum Umformen eines drehenden Glasintermediates 1^{I}, 1^{II}, 1^{III}, 1^{IV} schematisch abgebildet sind. Derartige Vorrichtungen 1^{I}, 1^{II}, 1^{III}, 1^{IV} werden folgend auch als Formgebungsvorrichtung, Vorformvorrichtung oder Endformvorrichtung bezeichnet. In Figur 2 ist schematisch eine Aufnahme 5 zum drehbaren Halten eines Glasintermediates 9 dargestellt. Die Anlage 3 umfasst ein Karussell 11 an dem die Aufnahme 5 angebracht ist. Das Karussell 11 ist um die Karussellachse 13 drehbar, wodurch die Aufnahme 9 zusammen mit dem Glasintermediat 9 den vier dargestellten Formgebungsvorrichtungen 1^{I}, 1^{II}, 1^{III}, 1^{IV} zugeführt werden kann. Dabei wird das Glasintermediat in Fertigungsumfangsrichtung 15 nacheinander den einzelnen Formgebungsvorrichtungen 1^{I}, 1^{II}, 1^{III}, 1^{IV} zugeführt. Vor der ersten Formgebungsvorrichtung 1^{I} sowie zwischen den darauf folgenden Formgebungsvorrichtungen 1^{II}, 1^{III} und hinter der letzten Formgebungsvorrichtung 1^{IV} sind jeweils Erwärmungsvorrichtung 2, insbesondere Brenner 2, zum Erwärmen des Glasintermediates 9 angeordnet.

In Fertigungsumfangsrichtung 15 fertigungsrichtungsaufwärts der ersten Formgebungsvorrichtung 1^{I} ist eine erste Prüfvorrichtung 17 vorgesehen, um die Position und den Planschlag des Glasintermediates 9 in der Aufnahme 5 zu vermessen.

In Fertigungsumfangsrichtung 15 fertigungsrichtungsabwärts der letzten Formgebungsvorrichtung 1^{IV} und des letzten Brenners 2 ist eine erste Kühlvorrichtung 7 zum Abkühlen des Glaszeuges nach erfolgter Formgebung zu bewirken.

In Fertigungsumfangsrichtung 15 fertigungsrichtungsabwärts der letzten Formgebungsvorrichtung 1^{IV}, und der ersten Kühlvorrichtung 2, ist eine zweite Prüfvorrichtung 19 zum Prüfen der Geometrie des Glaszeuges vorgesehen. In Fertigungsumfangsrichtung 15 fertigungsrichtungsabwärts der zweiten Prüfvorrichtung 19 ist eine zweite Kühlvorrichtung 7 und darauf folgenden eine dritte Prüfvorrichtung 21 zum Detektieren von Kratzern und/oder Sprüngen im Glaszeug vorgesehen. In Fertigungsumfangsrichtung 15 fertigungsrichtungsabwärts der dritten Prüfvorrichtung 21 ist eine dritte Kühlvorrichtung 7 vorgesehen. In Fertigungsumfangsrichtung 15 fertigungsrichtungsabwärts der dritten Kühlvorrichtung 7 ist eine Übergabevorrichtung 23 zum Übergeben des Glaszeuges zur weiteren Bearbeitung vorgesehen. Die Übergabevorrichtung 23 kann insbesondere Mittel zum Auffangen von aus der Aufnahme 5 ausgeworfenen Glaszeugen und/oder zum Transportieren der Glaszeuge zu weiteren Bearbeitungsvorrichtung (nicht dargestellt), wie Flanschformvorrichtungen, aufweisen.

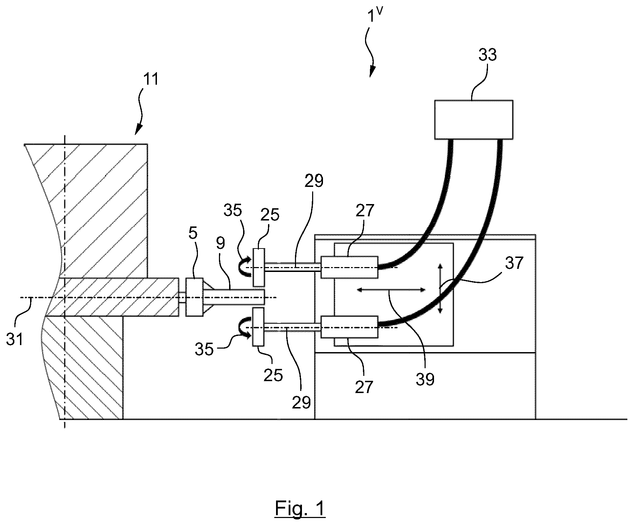

Figur 1 zeigt eine schematische Teildarstellung einer Anlage gemäß Figur 2, in der ein Ausschnitt des Karussells 11 mit einer ein Glasintermediat 9 haltenden Aufnahme 5 und eine der Formgebungsvorrichtungen 1^{I}, 1^{II}, 1^{III}, 1^{IV} schematisch als Formgebungsvorrichtung 1^{V} dargestellt ist.

Die Aufnahme 5 und das Glasintermediat 9 sind über einen nicht dargestellten Aufnahmemotor um eine Aufnahme-Drehachse 31 drehbar.

Die Formgebungsvorrichtung 1^{V} umfasst zwei Formrollen 25, die jeweils über einen Rollenmotor 27 um jeweils eine Rollendrehachse 29 drehbar sind. Die Rollenmotoren 27 werden über eine gemeinsame Steuerung 33 gesteuert, um die Drehzahl der Formrollen 25 in Umfangsrichtung 35 um die Rollendrehachse 29 zu steuern. Die translatorische Verstellbarkeit der Formrollen 25 ist durch die zwei Pfeile dargestellt. Der vertikal ausgerichtete Pfeil stellt die translatorische Verstellbarkeit der Formrollen 25 quer zu den Rollendrehachsen 29 und zur Aufnahme-Drehachse 31, insbesondere in Radialrichtung 37, dar. Der horizontal ausgerichtete Pfeil 39 stellt die translatorische Verstellbarkeit der Formrollen 25 längs zu den Rollendrehachsen 29 und zur Aufnahme-Drehachse 31, insbesondere in Axialrichtung 39, dar.

Die dargestellte Position der Formrollen 25 relativ zum Glasintermediat 9 stellt eine Position dar, in der die Formrollen 25 kurz vor dem Formabrollkontakt mit dem Glasintermediat 9 stehen. Um die Formrollen 25 in den Formabrollkontakt mit dem Glasintermediat 9 zu verbringen, müssen die Formrollen 25 in Radialrichtung 39 noch zumindest soweit verstellt werden, dass der zwischen den Formrollen 25 und dem Glasintermediat 9 bestehende Spalt überbrückt wird.

Die translatorische Verstellbarkeit der Formrollen 25 in Radialrichtung 37 dient insbesondere der Formgebung des Glasintermediates 9 in Radialrichtung 37. Die translatorische Verstellbarkeit der Formrollen 25 in Axialrichtung 39 dient insbesondere der axialen Zustellung der Formrollen 25 in Abhängigkeit der axialen Position des zu verformenden Bereiches des Glasintermediates 9. Insbesondere in Abhängigkeit der Dicke des Glasintermediates 9 kann die axiale Position und die Länge in Axialrichtung des zu verformenden Bereiches variieren. Insbesondere kann in einem vorgelagerten Schritt insbesondere bei dem Zuschneiden des Glasintermediates 9 dessen Dicke ermittelt werden und in Abhängigkeit der Dicke die Länge und/oder axiale Position des zu verformenden Bereiches ermittelt werden. Anschließend kann der Vorrichtung 1^{V} die Dicke, die Länge und/oder die axiale Position des zu verformenden Bereiches übermittelt werden, sodass die axiale Position der Formrollen 5 entsprechend eingestellt werden können. Dadurch können insbesondere auch bei variabler Dicke des Glasintermediates 9 Glaszeuge mit hoher Formgenauigkeit hergestellt werden. Diese Berücksichtigung der Variation der Dicke des Glasintermediates kann als Glasmassenkompensation bezeichnet werden.

Über die Aufnahme 5 kann das Glasintermediat 9 mit einer Aufnahmedrehzahl um die Aufnahmedrehachse 31 gedreht werde. Über die Rollmotoren 27 kann jeweils eine Formrolle 25 mit einer Rollendrehzahl um die jeweilige Rollendrehachse 29 gedreht werden. Durch Verfahren der Formrollen 25 entlang der Radialrichtung 37 auf die Aufnahmedrehachse 31 zu können die Formrollen 25 in einen Formabrollkontakt mit dem Glasintermediat 9 verbracht werden. Die Aufnahmedrehachse ist in Radialrichtung 37 über einen Intermediat-Radius von dem Formabrollkontakt beabstandet. Die Rollendrehachse 29 ist in Radialrichtung 37 um einen Rollenradius von dem Formabrollkontakt beabstandet.

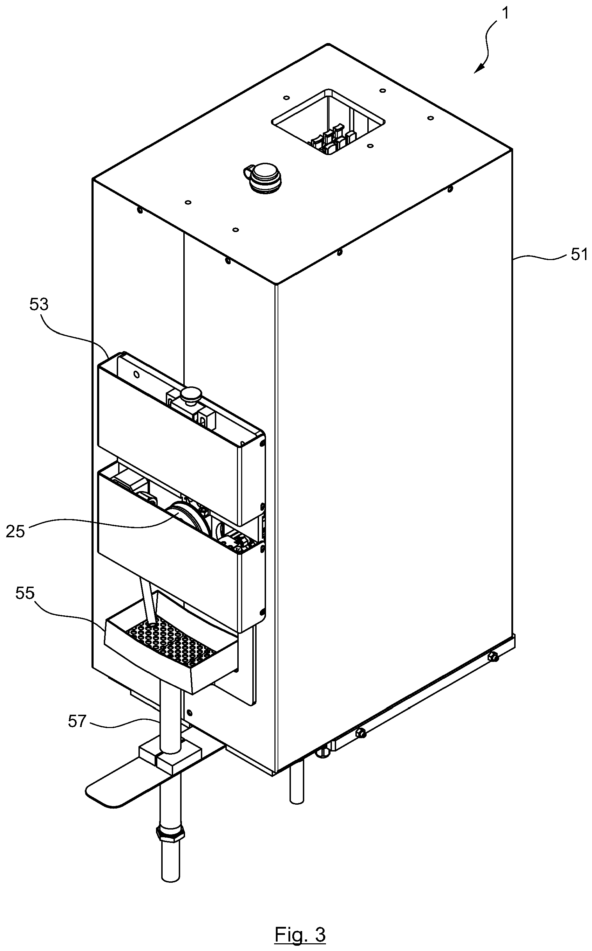

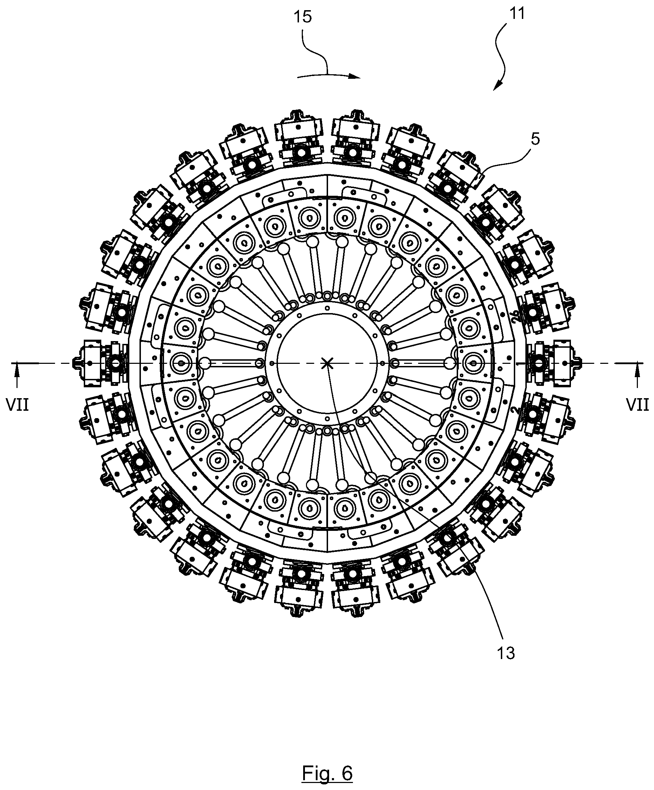

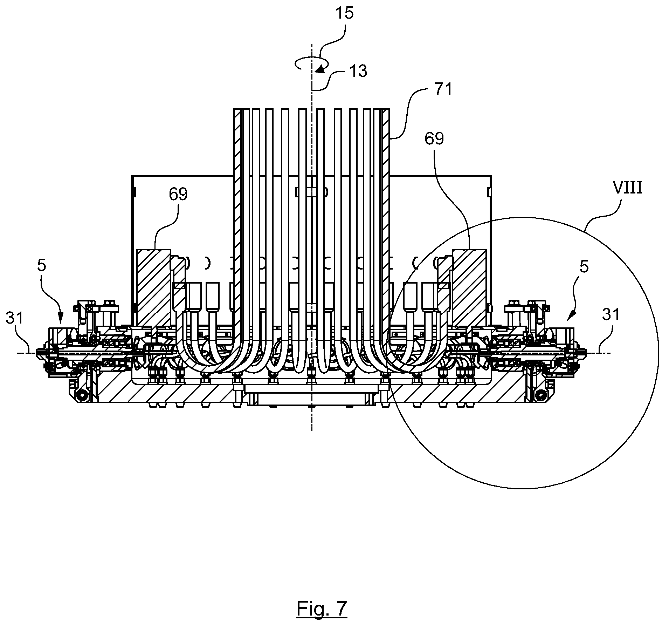

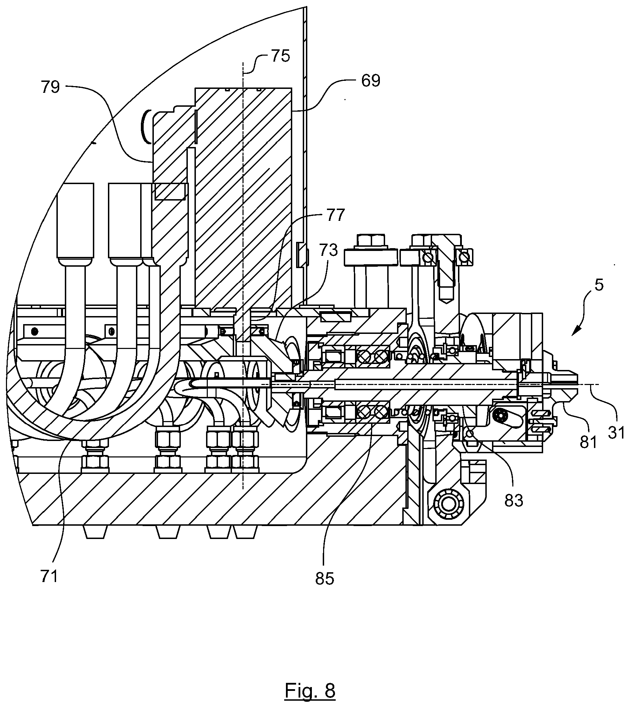

Gemäß dem ersten Aspekt der Erfindung wird das Verhältnis aus Rollendrehzahl zu Aufnahmedrehzahl während des Verfahrens in Abhängigkeit von dem Verhältnis aus Intermediat-Radius und Rollenradius gesteuert. In einer bevorzugten Ausführungsform verändert sich der Rollenradius während einem Formschritt nicht. Jedoch verkleinert sich der Intermediat-Radius durch Zustellung der Formrollen 25 in Rollenrichtung 37 auf die Aufnahmedrehachse 31 zu. Um zu verhindern, dass die Verkleinerung des Intermediat-Radius zu einer Vergrößerung der relativen Geschwindigkeit zwischen Glasintermediat 9 und den Formrollen 25 führt, kann entweder die Rollendrehzahl verkleinert oder die Aufnahmedrehzahl vergrößert werden. Vorzugsweise wird die Rollendrehzahl verkleinert. Um auch bei hohen Taktzeiten, insbesondere Taktzeiten von 0,5 Sekunden oder 1 Sekunde, eine kontinuierliche Anpassung der Rollendrehzahl und/oder der Aufnahmedrehzahl während der Verkleinerung des Intermediat-Radius bereitzustellen, wird insbesondere wie im Zusammenhang mit dem dritten Aspekt, vierten Aspekt und fünften Aspekt vorliegender Erfindung beschrieben die Rollendrehzahl der Formrollen 25 über einen Servomotor 27 im Millisekunden-Takt gesteuert. Eine Beispielhafte Verbindung des Servomotors 27 mit den Formrollen 25 in einer Formgebungsvorrichtung 1 ist insbesondere in den Figuren 3 bis 5 dargestellt. Gemäß dem zweiten und sechsten Aspekt der vorliegenden Erfindung erfolgt die Umformung des Glasintermediates zu einem Glaszeug in wenigstens einem Vorformschritt und wenigstens einem Endformschritt. Der wenigstens eine Vorformschritt und der Endformschritt können jeweils mit Formgebungsvorrichtungen wie beispielsweisen in den Figuren 3 bis 6 abgebildet durchgeführt werden. In Figur 2 ist eine schematisch eine Anlage gemäß dem sechsten Aspekt der Erfindung dargestellt, die eine erste Vorformvorrichtung 1^{I}, eine mittlerer Vorformvorrichtung 1^{II} und eine letzte Vorformvorrichtung 1^{III} aufweist. Die Endformvorrichtung ist mit der Bezugsziffer 1^{IV} dargestellt. Um das Glasintermediat 9 zwischen den drei Vorformvorrichtungen 1^{I}, 1^{II}, 1^{III} und der Endformvorrichtung 1^{IV} verfahren zu können, ist die Aufnahme 5 über eine Zustellvorrichtung 11 in Form eines Karussells 11 zwischen den Vorformvorrichtungen und der Endformvorrichtung verfahrbar. Hierfür sind die Vorformvorrichtungen 1^{I}, 1^{II}, 1^{III} und die Endformvorrichtung 1^{IV} um das Karussell 11 herum angeordnet. Eine beispielhafte Ausführung eines Karussells 11 ist in Figur 6 in Draufsicht, in Figur 7 in Schnittansicht und in Figur 8 in Teilschnittansicht dargestellt.

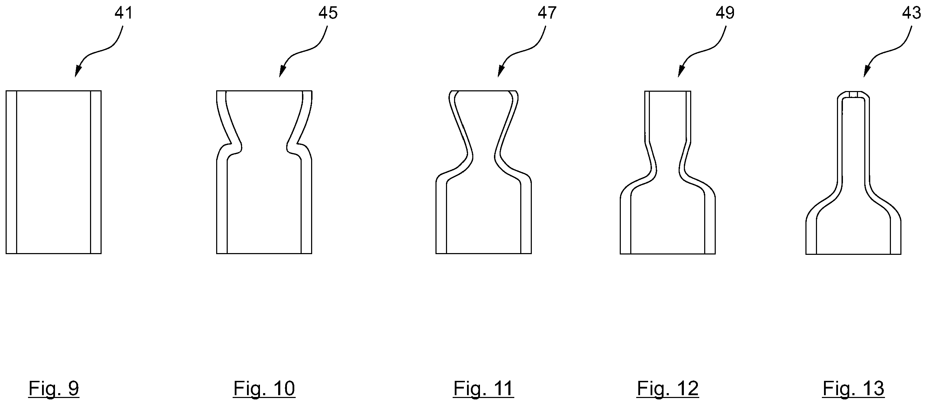

Durch die Verwendung von wenigstens einer, insbesondere drei, Vorformvorrichtung 1^{I}, 1^{II}, 1^{III} und einer Endformvorrichtung 1^{IV} kann das Glasintermediat 9 in mehreren Schritten von einem hohlzylinderförmigen Glasintermediat 41, wie in Figur 9 dargestellt, zu einem Glaskonus 43, wie in Figur 13 dargestellt, umgeformt werden. Insbesondere durch die Verwendung von drei Vorformschritten kann das Glasintermediat wie in den Figuren 10, 11 und 12 dargestellt schrittweise von dem hohlzylinderförmigen Glasintermediat 41 zum Glaskonus 43 umgeformt werden. Figur 10 zeigt ein eingeschnürtes Glasintermediat 45 nach einem ersten Vorformschritt. Dabei wurde insbesondere der zu verformende Bereich des Glasintermediates in eine Konusform geformt. Figur 11 zeigt ein ausgedünntes Glasintermediat 47, das durch Ausdünnung des eingeschnürten Glasintermediates 45 gemäß Figur 10 geformt wurde. Figur 12 zeigt ein begradigtes Glasintermediat 49, das nach der Einschnürung in einem ersten Vorformschritt und der Ausdünnung in einen mittleren Vorformschritt in dem letzten Vorformschritt wieder abschnittsweise in eine Hohlzylinderform verbracht wurde. Anschließend kann durch einen Endformschritt in einer Endformvorrichtung 1^{IV} der Glaskonus 43, wie in Figur 13 dargestellt, hergestellt werden.

Die Erfinder der vorliegenden Erfindung haben herausgefunden, dass durch Aufteilung der Umformung von dem hohlzylinderförmigen Glasintermediat 41 gemäß Figur 9 zum Glaskonus 43 gemäß Figur 13 in mehrere Formschritte die optimalen Bedingungen für die Verformungen in den einzelnen Formschritten eingestellt werden können, so dass eine hohe Formgenauigkeit erzielt werden kann. Insbesondere kann die Rollendrehzahl und/oder die Aufnahmedrehzahl niedrig eingestellt werden, wo dies für eine hohe Formgenauigkeit erforderlich ist, und dort hoch eingestellt werden, wo dies ohne Einbußen der Formgenauigkeit möglich ist, um die Taktzeiten reduzieren zu können. Um die Taktzeiten weiter zu reduzieren, hat es sich als vorteilhaft herausgestellt, mehrere Aufnahmen 5 an einem Karussell 11 anzubringen, so dass die einzelnen Umformschritte und/oder die anderen zuvor und nachfolgend beschriebenen Fertigungsschritte parallel durchgeführt werden können und so die Taktzeit zur Herstellung der Glaszeuge weiter reduziert werden kann. Eine beispielhafte Ausführungsform eines Aufnahmekarussells 11 ist insbesondere in Draufsicht in Figur 6, in Querschnittsansicht in Figur 7 und ausschnittsweise in Querschnittsansicht in Figur 8 dargestellt.

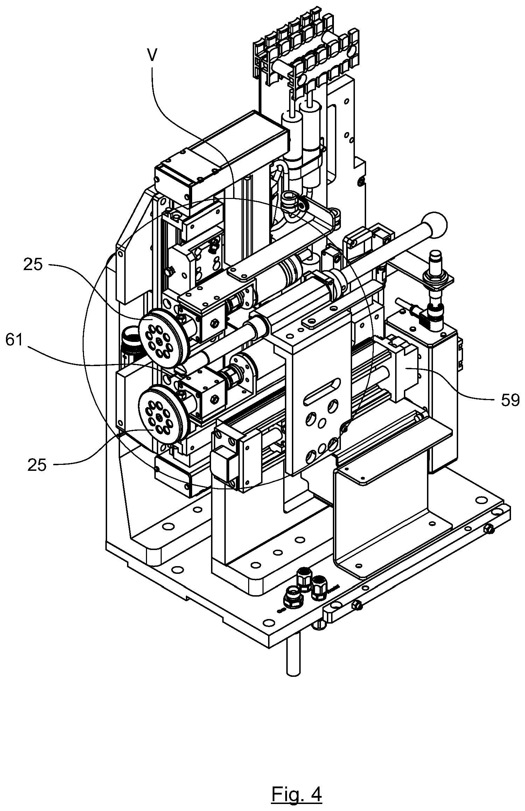

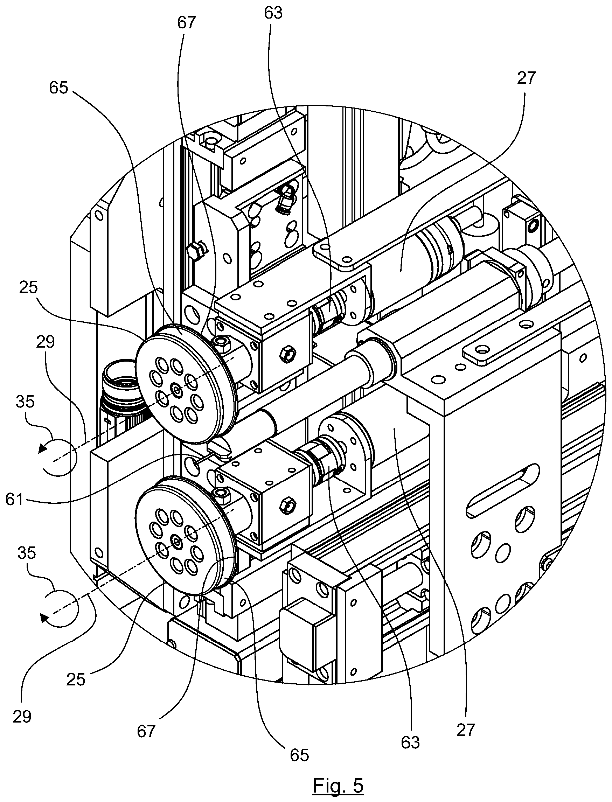

Figur 3 zeigt eine Formgebungsvorrichtung mit einem Gehäuse 51, das die in Figur 4 und 5 dargestellten Teile der Formgebungsvorrichtung 1 umhaust. Aus dem Gehäuse 51 ragen zwei Formrollen 25 heraus, die wiederum mit Formrollengehäusen 53 umhaust sind. Die Formrollengehäuse 53 sind in Radialrichtung 37 offen, so dass die Formrollen 25 in Radialrichtung aus den Formrollengehäusen 53 herausstehen können. Dadurch kann das nicht dargestellte Glasintermediat 9 in Axialrichtung 39 zwischen die Formrollen 25 verfahren werden. Anschließend können die Formrollen 25 in Radialrichtung 37 auf die Aufnahmedrehachse 31 zu verstellt werden. Unterhalb der Formrollen 25 ist ein Auffangbecken 55 ausgebildet, über das Schmiermittel und Schmutz sowie Verschleißreste über eine Abführleitung 57 abgeführt werden kann.

Figur 4 zeigt einen Teil der Formgebungsvorrichtung 1 ohne das Gehäuse 51 und ohne die Formrollengehäuse 53, wobei die Antriebe zum Verstellen der Formrollen 25 in Axialrichtung 39 und in Radialrichtung 37 ausgeblendet sind. In Figur 4 ist eine Axialführung 59 zum Führen des darin dargestellten Umformdorns 61 dargestellt. Dadurch kann der Umformdorn 61 in Axialrichtung 39 über einen nicht dargestellten Axialantrieb verfahren werden. Dadurch kann der Umformdorn in das Innere eines Glasintermediates 9 verfahren werden, um das Glasintermediat 9 in Formabrollkontakt von innen zu formen, während die Formrollen 25 das Glasintermediat 9 von außen formen. Die Rollenmotoren 27, über die die zwei Formrollen 25 in Umfangsrichtung 35 um die Rollendrehachse 29 angetrieben werden können, sind im Zusammenhang mit Figur 5 beschrieben, die eine vergrößerte Ansicht des umkreisten Abschnitts V aus Figur 4 darstellt. Wie in Figur 5 dargestellt, umfasst die wenigstens eine Formrolle 25, vorzugsweise zwei Formrollen 25, die in Radialrichtung 37 zueinander beabstandet sind, so dass das Glasintermediat 9 zwischen den Formrollen 25 geformt werden kann. Dabei kann der Umformdorn 61 in das Innere des Glasintermediates 9 verfahren werden, um das Glasintermediat in den Formabrollkontakt innenseitig durch den Umformdorn und außenseitig durch die Formrollen umzuformen. Die Formrollen 25 sind über jeweils einen Rollenmotor 27 angetrieben. Die Motorabtriebswelle der Rollmotoren 27 ist jeweils über eine Klauenkupplung 23 mit den Formrollen 25 gekoppelt. Insbesondere ist die Motorabtriebswelle der Rollmotoren 27 über die Klauenkupplung 23 jeweils derart mit den Formrollen 25 gekoppelt, dass die Formrollen der Drehbewegung der Motorabtriebswelle direkt folgen.

Dadurch, dass jede der Formrollen 25 einen eigenen Rollenmotor 27 aufweisen, kann jede der Formrollen unabhängig von der anderen angetrieben werden. Wie zuvor beschrieben sind die Rollenmotoren 27 als Servomotoren ausgebildet, um eine Einstellung der Rollendrehzahl im Millisekunden-Takt vornehmen zu können. Die Formrollen 25 weisen jeweils eine Formfläche 65 auf. Die Formflächen 65 sind in dem hier dargestellten Ausführungsbeispiel als Zylindermantelflächen mit ringförmigem Vorsprung 67 ausgebildet. Der Umformdorn 61 ist hier als Zylinder ausgebildet. Wie zuvor beschrieben, können jedoch sowohl die Formflächen der Formrollen 25 als auch der Umformdorn 61 kegelmantelförmig ausgebildet sein.

Figur 6 zeigt eine Draufsicht auf eine Ausführungsform einer Zustellvorrichtung 11 zum Verfahren der wenigstens einen Aufnahme 5 von der wenigstens einen Vorformvorrichtung 1^{I}, 1^{II}, 1^{III} zu der Endformvorrichtung 1^{IV} in Form eines Karussells 11. Das in Figur 6 dargestellte Karussell 11 weist 26 Aufnahmen 5 auf, mit denen jeweils ein Glasintermediat 9 aufgenommen werden kann. Dadurch können bis zu 26 Glasintermediate 9 gleichzeitig mit der erfindungsgemäßen Anlage 3 zu Glaszeugen umgeformt werden. Hierzu werden, wie in Zusammenhang mit Figur 2 beschrieben, mehrere Fertigungsvorrichtungen, wie Kühlvorrichtungen 7, Prüfvorrichtungen 17, 19, 21, eine Übergabevorrichtung 23, Vorformvorrichtungen 1^{I}, 1^{II}, 1^{III} und eine Endformvorrichtungen 1^{IV} um das Karussell 11, insbesondere um die Karussellachse 13 herum, angeordnet. Dadurch können insbesondere bis zu 26 Glasintermediate gleichzeitig an verschiedenen Fertigungsvorrichtungen bearbeitet werden. Insbesondere kann durch Drehung des Karussells 11 eine Aufnahme 5 mit einem Glasintermediat 9 von Bearbeitungsvorrichtung zu Bearbeitungsvorrichtung verfahren werden. Dadurch kann insbesondere die Taktzeit zur Herstellung von Glaszeugen auf die Taktzeit zur Bearbeitung der Glaszeuge in einer Fertigungsvorrichtung reduziert werden, da die Anlage mit jedem Verfahren von einer Fertigungsvorrichtung zur nächsten die Herstellung eines Glaszeuges abschließen kann.

Figur 7 zeigt eine Querschnittsansicht entlang der Schnittlinie VII-VII aus Figur 6. Wie insbesondere Figur 4 entnehmbar ist, kann jede Aufnahme 5 über einen eigenen Aufnahmemotor 69 angetrieben werden. Über den Aufnahmemotor 69 wird die Aufnahme 5 jeweils um die Aufnahmedrehachse 31 rotiert. Insbesondere durch das Ausstatten jeder Aufnahme 5 mit einem eigenen Aufnahmemotor 69 können die Glasintermediate 9 zeitgleich an unterschiedlichen Vorformvorrichtungen 1 mit unterschiedlichen Aufnahmedrehzahlen um die Aufnahmedrehachse 31 rotiert werden. Insbesondere können die Aufnahmen 5 in Fertigungsumfangsrichtung 15 um die Karussellachse 30 angeordnet sein. Insbesondere können die Aufnahmen 5 in Radialrichtung zur Karussellachse 30 außenseitig an dem Karussell 11 angebracht sein. Insbesondere können die Aufnahmemotoren 69 in Radialrichtung zur Karussellachse 30 innenseitig zu den Aufnahmen 5 angeordnet sein. Insbesondere kann die Stromversorgung der Aufnahmemotoren 69 in Radialrichtung zur Aufnahmedrehachse 31 innenseitig zu den Aufnahmemotoren 69 geführt werden.

Eine Vergrößerung des Ausschnitts VIII aus Figur 7 ist in Figur 8 dargestellt. Wie in Figur 8 dargestellt, können die Aufnahmemotoren 69 über Stirnverzahnungen 63 mit den Aufnahmen 5 gekoppelt sein. Dadurch kann die Drehachse 75 der Motorabtriebswelle 77 in einem Winkel, insbesondere orthogonal, zur Aufnahmedrehachse 31 angeordnet sein. Dadurch kann insbesondere der Raumbedarf der Zustellvorrichtung 11, insbesondere des Karussells, in Radialrichtung zur Karussellachse 13 verkleinert werden. Ferner kann die Stromversorgung 71 über eine Steckverbindung 79 mit dem Aufnahmemotor 69 verbindbar sein. Die Aufnahme 5 kann insbesondere ein Futter 81 zum Halten des Glasintermediates aufweisen. Das Futter kann insbesondere drehfest mit einer Aufnahmewelle 83 verbunden sein. Die Aufnahmewelle 83 kann über eine Radiallagerung 85 gelagert sein. Insbesondere kann die Aufnahmewelle 83 über die Stirnverzahnung 73 mit der Motorabtriebswelle 77 des Rollenmotors 69 verbunden sein.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHENLISTE

- 1: Vorrichtung/Vorformvorrichtung/Endformvorrichtung/FormgebungsVorrichtung (1) (1^{I}, 1^{II}, 1^{III} , 1^{IV}, 1^{V})
- 2: Erwärmungsvorrichtung/Brenner
- 3: Anlage
- 5: Aufnahme
- 7: Kühlvorrichtung
- 9: Glasintermediat
- 11: Karussell; Zustellvorrichtung
- 13: Karussellachse
- 15: Fertigungsrichtung/Fertigungsumfangsrichtung
- 17: erste Prüfvorrichtung
- 19: zweite Prüfvorrichtung
- 21: dritte Prüfvorrichtung
- 23: Übergabevorrichtung
- 25: Formrolle
- 27: Rollenmotor
- 29: Rollendrehachse
- 31: Aufnahmedrehachse
- 33: Steuerung
- 35: Umfangsrichtung
- 37: Radialrichtung
- 39: Axialrichtung
- 41: hohlzylinderförmiges Glasintermediat
- 43: Glaskonus
- 45: eingeschnürtes Glasintermediat
- 47: ausgedünntes Glasintermediat
- 49: begradigtes Glasintermediat
- 51: Gehäuse
- 53: Formrollengehäuse
- 55: Auffangbecken
- 57: Abführleitung
- 59: Axialführung
- 61: Umformdorn
- 63: Klauenkupplung
- 65: Formfläche
- 67: ringförmiger Vorsprung
- 69: Aufnahmemotor
- 71: Stromversorgung
- 73: Stirnverzahnung
- 75: Drehachse der Motorabtriebswelle der Aufnahmedrehachse
- 77: Motorabtriebswelle des Aufnahmemotors
- 79: Steckverbindung
- 81: Futter
- 83: Aufnahmewelle
- 85: Radiallagerung

## Patentansprüche

1. Verfahren zum Herstellen eines insbesondere rotationssymmetrischen Glaszeuges, wie einer Glasspritze, einer Glaskarpule, eines Glasvials oder einer Glasampulle, umfassend die Schritte:
- Rotieren eines Glasintermediates (9), insbesondere Glasrohr, mit einer Aufnahme-Drehzahl um eine Aufnahme-Drehachse (31);
- Rotieren wenigstens einer Formrolle (25) mit einer Rollen-Drehzahl um eine Rollen-Drehachse (29); und
- Verbringen der wenigstens eine Formrolle (25) und des Glasintermediates (9) zum Formgeben in einen Formabrollkontakt, von dem die Aufnahme-Drehachse (31) in Radialrichtung (37) um einen Intermediat-Radius beabstandet ist und von dem die Rollen-Drehachse (29) in Radialrichtung (37) um einen Rollen-Radius beabstandet ist,
**dadurch gekennzeichnet, dass**
das Verhältnis aus Rollen-Drehzahl zu Aufnahme-Drehzahl während dem Verfahren in Abhängigkeit von dem Verhältnis aus Intermediat-Radius zu Rollen-Radius gesteuert wird.

2. Verfahren nach Anspruch 1, wobei der Intermediat-Radius im Formabrollkontakt durch Verkleinerung des Abstandes zwischen Rollen-Drehachse (29) und Aufnahme-Drehachse (31) von einem Anfangsradius auf einen Endradius verkleinert wird, wobei die Rollen-Drehzahl während der Verkleinerung vom Anfangsradius zum Endradius verkleinert wird, insbesondere proportional zum Intermediat-Radius verkleinert wird, und/oder wobei das Verhältnis aus Rollen-Drehzahl zu Aufnahme-Drehzahl während der Verkleinerung vom Anfangsradius zum Endradius verkleinert wird, insbesondere proportional zum Intermediat-Radius verkleinert wird, und/oder wobei die Verkleinerung von dem Anfangsradius auf den Endradius durch Zustellung der wenigstens einen Formrolle (25) in Radialrichtung (37) erfolgt und/oder wobei die Rollen-Drehzahl in Abhängigkeit der Radialstellung der wenigstens einen Formrolle (25) gesteuert wird.

3. Verfahren nach einem der vorstehenden Ansprühe, wobei das Verhältnis von Rollen-Drehzahl zu Aufnahme-Drehzahl derart abhängig zum Verhältnis aus Intermediat-Radius zu Rollen-Radius gesteuert wird, dass die Relativgeschwindigkeit zwischen dem Glasintermediat (9) und der wenigstens einen Formrolle (25) im Formabrollkontakt höchstens 50%, 30%, 20%, 10%, 5% oder 1% der Umfangsgeschwindigkeit der wenigstens einen Formrolle (25) im Formabrollkontakt beträgt.

4. Verfahren insbesondere nach einem der vorstehenden Ansprüche zum Herstellen eines insbesondere rotationssymmetrischen Glaszeuges, wie einer Glasspritze, einer Glaskarpule, eines Glasvials oder einer Glasampulle, umfassend die Schritte:
- Umformen wenigstens eines Glasintermediates (9), insbesondere Glasrohrs, in wenigstens einem Vorformschritt, in dem das wenigstens eine Glasintermediat (9) zur Formgebung in einem Formabrollkontakt mit wenigstens einer Formrolle (25) um eine Vorformdrehzahl rotiert wird; und
- Umformen des wenigstens einen Glasintermediates (9) in einem Endformschritt, in dem das wenigstens eine Glasintermediat (9) zur Formgebung in einem Formabrollkontakt mit einer Formrolle (25) um eine Endformdrehzahl rotiert wird;
- wobei die Endformdrehzahl größer oder kleiner als die Vorformdrehzahl ist.

5. Verfahren nach Anspruch 4, wobei die Vorformdrehzahl im Formabrollkontakt des wenigstens einen Vorformschritts konstant ist, insbesondere während einer Verkleinerung des Intermediat-Radius von einem Anfangsradius auf einen Endradius konstant ist, und/oder wobei die Endformdrehzahl im Formabrollkontakt des Endformschritts konstant ist, insbesondere während einer Verkleinerung des Intermediat-Radius von einem Anfangsradius auf einen Endradius konstant ist, und/oder wobei die wenigstens eine Vorformdrehzahl im Betrag um wenigstens 10 %, 30 %, 50 %, 100 %, 200% oder 300 % größer oder kleiner ist als die Endformdrehzahl und/oder wobei die Endformdrehzahl größer ist als die Vorformdrehzahl, insbesondere wobei die Vorformdrehzahl 20% bis 90%, insbesondere 30% bis 80 %, der Endformdrehzahl beträgt.

6. Verfahren nach Anspruch 4 oder 5, wobei der wenigstens einen Vorformschritt einen in Fertigungsrichtung (15) ersten Vorformschritt mit einer ersten Vorformdrehzahl und einen in Fertigungsrichtung (15) letzten Vorformschritt mit einer letzten Vorformdrehzahl aufweist, insbesondere wobei die erste Vorformdrehzahl größer ist als die letzte Vorformdrehzahl, insbesondere wobei die erste Vorformdrehzahl 10% bis 30%, insbesondere 15 % bis 20 %, größer ist als die letzte Vorformdrehzahl.

7. Verfahren nach einem der Ansprüche 4 bis 6, wobei der wenigstens eine Vorformschritt einen in Fertigungsrichtung (15) ersten Vorformschritt mit einer ersten Vorformdrehzahl, einen in Fertigungsrichtung (15) letzten Vorformschritt mit einer letzten Vorformdrehzahl und einen in Fertigungsrichtung (15) mittleren Vorformschritt mit einer mittleren Vorformdrehzahl aufweist, insbesondere wobei die erste Vorformdrehzahl kleiner ist als die mittlere Vorformdrehzahl, insbesondere wobei die erste Vorformdrehzahl 40 % bis 90 %, insbesondere 60 % bis 70 %, der mittleren Vorformdrehzahl beträgt, und/oder wobei die letzte Vorformdrehzahl kleiner ist als die mittlere Vorformdrehzahl, insbesondere wobei die letzte Vorformdrehzahl 30 % bis 80 %, insbesondere 50% bis 60 %, der mittleren Vorformdrehzahl beträgt.

8. Verfahren nach einem der Ansprüche 4 bis 7, wobei der wenigstens eine Vorformschritt in wenigstens einer Vorformvorrichtung (1^{I}, 1^{II}, 1^{III}) und der Endformschritt in einer Endformvorrichtung (1^{IV}) durchgeführt werden, insbesondere wobei das wenigstens eine Glasintermediat (9) nach dem wenigstens einen Vorformschritt zu der Endformvorrichtung (1^{IV}) verfahren wird, insbesondere wobei das Verfahren des Glasintermediates (9) mittels einer Zustellvorrichtung (11), insbesondere durch drehen eines Karussells (11), erfolgt, und/oder wobei das wenigstens eine Glasintermediat (9) wenigstens 2, insbesondere wenigstens 4, 8, 16 oder 32, Glasintermediate (9) aufweist, die parallel an wenigstens einer Vorformvorrichtung (1^{I}, 1^{II}, 1^{III}) und an einer Endformvorrichtung (1^{IV}) umgeformt werden.

9. Verfahren nach einem der Ansprüche 4 bis 8, wobei die wenigstens eine Formrolle (25) im Formabrollkontakt in dem wenigstens einen Vorformschritt und in dem Endformschritt jeweils mit einer Rollen-Drehzahl rotiert wird, die in Abhängigkeit von der Intermediat-Drehzahl und/oder von dem Intermediat-Radius gesteuert wird, insbesondere wobei die Rollen-Drehzahl in dem wenigstens einen Vorformschritt und dem Endformschritt derart gesteuert wird, dass das Verhältnis der Umfangsgeschwindigkeit der wenigstens einen Formrolle (25) und des Glasintermediates (9) im Formabrollkontakt sich zwischen dem wenigstens einen Vorformschritt und dem Endformschritt um weniger als 50 %, 30 %, 20%, 10 %, 5 % oder 1 % unterscheiden.

10. Verfahren nach einem der vorstehenden Ansprüche , wobei die Aufnahme-Drehzahl und/oder die Rollen-Drehzahl während dem Verfahren über einen Servomotor (27, 69) gesteuert wird.

## Claims

1. Method for producing an in particular rotationally symmetrical glass article, such as a glass syringe, a glass carpule, a glass vial or a glass ampoule, comprising the steps of:
- rotating a glass intermediate (9), in particular a glass tube, at a receiving rotational speed about a receiving rotational axis (31);
- rotating at least one forming roller (25) at a roller rotational speed about a roller rotational axis (29); and
- bringing the at least one forming roller (25) and the glass intermediate (9) into a forming rolling contact for forming, from which the receiving rotational axis (31) is spaced apart in the radial direction (37) by an intermediate radius and from which the roller rotational axis (29) is spaced apart in the radial direction (37) by a roller radius,
**characterized in that**
the ratio of the roller rotational speed to the receiving rotational speed is controlled during the method as a function of the ratio of the intermediate radius to the roller radius.

2. Method according to Claim 1, wherein the intermediate radius is reduced in the forming rolling contact by reducing the distance between the roller rotational axis (29) and the receiving rotational axis (31) from an initial radius to an end radius, wherein the roller rotational speed is reduced during the reduction from the initial radius to the end radius, in particular is reduced proportionally to the intermediate radius, and/or wherein the ratio of the roller rotational speed to the receiving rotational speed is reduced during the reduction from the initial radius to the end radius, in particular is reduced proportionally to the intermediate radius, and/or wherein the reduction from the initial radius to the end radius takes place by feeding the at least one forming roller (25) in the radial direction (37), and/or wherein the roller rotational speed is controlled as a function of the radial position of the at least one forming roller (25).

3. Method according to one of the preceding claims, wherein the ratio of the roller rotational speed to the receiving rotational speed is controlled as a function of the ratio of the intermediate radius to the roller radius such that the relative speed between the glass intermediate (9) and the at least one forming roller (25) in the forming rolling contact is at most 50%, 30%, 20%, 10%, 5% or 1% of the circumferential speed of the at least one forming roller (25) in the forming rolling contact.

4. Method in particular according to one of the preceding claims for producing an in particular rotationally symmetrical glass article, such as a glass syringe, a glass carpule, a glass vial or a glass ampoule, comprising the steps of:
- forming at least one glass intermediate (9), in particular a glass tube, in at least one preforming step, in which the at least one glass intermediate (9) is rotated by a preforming rotational speed for forming in a forming rolling contact with at least one forming roller (25); and
- forming the at least one glass intermediate (9) in a final forming step, in which the at least one glass intermediate (9) is rotated by a final forming rotational speed for forming in a forming rolling contact with a forming roller (25);
- wherein the final forming rotational speed is greater than or less than the preforming rotational speed.

5. Method according to Claim 4, wherein the preforming rotational speed is constant in the forming rolling contact of the at least one preforming step, in particular is constant during a reduction of the intermediate radius from an initial radius to an end radius, and/or wherein the final forming rotational speed is constant in the forming rolling contact of the final forming step, in particular is constant during a reduction of the intermediate radius from an initial radius to an end radius, and/or wherein the at least one preforming rotational speed is greater than or less than the final forming rotational speed in terms of absolute value by at least 10%, 30%, 50%, 100%, 200% or 300%, and/or wherein the final forming rotational speed is greater than the preforming rotational speed, in particular wherein the preforming rotational speed is 20% to 90%, in particular 30% to 80%, of the final forming rotational speed.

6. Method according to Claim 4 or 5, wherein the at least one preforming step has a first preforming step with a first preforming rotational speed in the production direction (15) and a last preforming step with a last preforming rotational speed in the production direction (15), in particular wherein the first preforming rotational speed is greater than the last preforming rotational speed, in particular wherein the first preforming rotational speed is 10% to 30%, in particular 15% to 20%, greater than the last preforming rotational speed.

7. Method according to one of Claims 4 to 6, wherein the at least one preforming step has a first preforming step with a first preforming rotational speed in the production direction (15), a last preforming step with a last preforming rotational speed in the production direction (15) and a middle preforming step with a middle preforming rotational speed in the production direction (15), in particular wherein the first preforming rotational speed is less than the middle preforming rotational speed, in particular wherein the first preforming rotational speed is 40% to 90%, in particular 60% to 70%, of the middle preforming rotational speed, and/or wherein the last preforming rotational speed is less than the middle preforming rotational speed, in particular wherein the last preforming rotational speed is 30% to 80%, in particular 50% to 60%, of the middle preforming rotational speed.

8. Method according to one of Claims 4 to 7, wherein the at least one preforming step is carried out in at least one preforming device (1^{I}, 1^{II}, 1^{III}) and the final forming step is carried out in a final forming device (1^{IV}), in particular wherein the at least one glass intermediate (9) is moved to the final forming device (1^{IV}) after the at least one preforming step, in particular wherein the glass intermediate (9) is moved by means of a feed device (11), in particular by rotating a carousel (11), and/or wherein the at least one glass intermediate (9) has at least 2, in particular at least 4, 8, 16 or 32, glass intermediates (9) which are formed in parallel on at least one preforming device (1^{I}, 1^{II}, 1^{III}) and on a final forming device (1^{IV}).

9. Method according to one of Claims 4 to 8, wherein the at least one forming roller (25) is rotated in the forming rolling contact in the at least one preforming step and in the final forming step in each case at a roller rotational speed which is controlled as a function of the intermediate rotational speed and/or of the intermediate radius, in particular wherein the roller rotational speed is controlled in the at least one preforming step and the final forming step such that the ratio of the circumferential speed of the at least one forming roller (25) and of the glass intermediate (9) in the forming rolling contact differ between the at least one preforming step and the final forming step by less than 50%, 30%, 20%, 10%, 5% or 1%.

10. Method according to one of the preceding claims, wherein the receiving rotational speed and/or the roller rotational speed is controlled during the method via a servomotor (27, 69).

## Revendications

1. Procédé, destiné à fabriquer un produit en verre, notamment symétrique en rotation, comme une seringue en verre, une cartouche en verre, un tube en verre ou une ampoule en verre, comprenant les étapes consistant à :
- mettre en rotation un intermédiaire (9) en verre, notamment un tube en verre, à une vitesse de rotation d'admission, autour d'un axe de rotation (31) d'admission ;
- mettre en rotation au moins un rouleau de formage (25) à une vitesse de rotation de rouleau, autour d'un axe de rotation (29) de rouleau ; et
- pour le formage, amener l'au moins un rouleau de formage (25) et l'intermédiaire (9) en verre en un contact de formage par roulage, duquel l'axe de rotation (31) d'admission est écarté dans la direction radiale (37) de la valeur d'un rayon d'intermédiaire et duquel l'axe de rotation (29) de rouleau est écarté dans la direction radiale (37) de la valeur d'un rayon de rouleau,
**caractérisé en ce que**
l'on commande pendant le procédé le rapport de la vitesse de rotation de rouleau à la vitesse de rotation d'admission en fonction du rapport du rayon de l'intermédiaire au rayon du rouleau.

2. Procédé selon la revendication 1, en contact de formage par roulage, par réduction de l'écart entre l'axe de rotation (29) de rouleau et l'axe de rotation (31) d'admission, le rayon de l'intermédiaire étant réduit d'un rayon initial à un rayon final, pendant la réduction du rayon initial au rayon final, la vitesse de rotation de rouleau étant réduite, notamment proportionnellement au rayon de l'intermédiaire et / ou la réduction du rayon initial au rayon final s'effectuant par mise en prise de l'au moins un rouleau de formage (25) dans la direction radiale (37) et / ou la vitesse de rotation de rouleau étant commandée en fonction de la position radiale de l'au moins un rouleau de formage (25).

3. Procédé selon l'une quelconque des revendications précédentes, le rapport de la vitesse de rotation de rouleau à la vitesse de rotation d'admission étant commandée en fonction du rapport du rayon de l'intermédiaire au rayon de rouleau, de telle sorte qu'en contact de formage par roulage, la vitesse relative entre l'intermédiaire (9) en verre et l'au moins un rouleau de formage (25) s'élève au maximum à 50 %, 30 %, 20 %, 10 %, 5 % ou 1% de la vitesse circonférentielle de l'au moins rouleau de formage (25) en contact de formage par roulage.

4. Procédé, notamment selon l'une quelconque des revendications précédentes, destiné à fabriquer un produit en verre, notamment symétrique en rotation, comme une seringue en verre, une cartouche en verre, un tube en verre ou une ampoule en verre, comprenant les étapes consistant à :
- façonner au moins un intermédiaire (9) en verre, notamment un tube en verre, en au moins une étape de préformage, en ce que pour le formage, l'on met en rotation l'au moins un intermédiaire (9) en verre, en un contact de formage par roulage avec au moins un rouleau de formage (25) de la valeur d'une vitesse de rotation de préformage ; et
- façonner l'au moins un intermédiaire (9) en verre dans une étape de formage final, lors de laquelle pour le formage, l'on met en rotation l'au moins un intermédiaire (9) en verre, en un contact de formage par roulage avec un rouleau de formage (25) de la valeur d'une vitesse de rotation finale ;
- la valeur de la vitesse de rotation finale étant supérieure ou inférieure à la valeur de la vitesse de rotation de préformage.

5. Procédé selon la revendication 4, en contact de formage par roulage, la vitesse de rotation de préformage de l'au moins une étape de préformage étant constante, notamment pendant une réduction du rayon de l'intermédiaire d'un rayon initial à un rayon final, et / ou en contact de formage par roulage, la vitesse de rotation de formage final dans l'étape de formage final étant constante, notamment pendant une réduction du rayon de l'intermédiaire d'un rayon initial à un rayon final, et / ou l'au moins une vitesse de rotation de préformage étant par son montant supérieure ou inférieure d'au moins 10 %, 30 %, 50 %, 100 %, 200 % ou 300 % à la vitesse de rotation de formage final et / ou la vitesse de rotation de formage final étant supérieure à la vitesse de rotation de préformage, notamment la vitesse de rotation de préformage s'élevant à de 20 % à 90 %, notamment à de 30 % à 80 % de la vitesse de rotation de formage final.

6. Procédé selon la revendication 4 ou 5, l'étape de préformage comportant une première étape de préformage dans la direction de fabrication (15), à une première vitesse de rotation de préformage et une dernière étape de préformage dans la direction de fabrication (15), à une dernière vitesse de rotation de préformage, notamment la première vitesse de rotation de préformage étant supérieure à la dernière vitesse de rotation de préformage, notamment la première vitesse de rotation de préformage étant supérieure de 10 % à 30 %, notamment de 15 % à 20 % à la dernière vitesse de rotation de préformage.

7. Procédé selon l'une quelconque des revendications 4 à 6, l'au moins une étape de préformage comportant une première étape de préformage dans la direction de fabrication (15), à une première vitesse de rotation de préformage, une dernière étape de préformage dans la direction de fabrication (15), à une dernière vitesse de rotation de préformage et une étape de préformage médiane dans la direction de fabrication (15), à une vitesse de rotation de préformage médiane, notamment la première vitesse de rotation de préformage étant inférieure à la vitesse de rotation de préformage médiane, notamment la première vitesse de rotation de préformage s'élevant à de 40 % à 90 %, notamment à de 60 % à 70 % de la vitesse de rotation de préformage médiane et / ou la dernière vitesse de rotation de préformage étant inférieure à la vitesse de rotation de préformage médiane, notamment la dernière vitesse de rotation de préformage s'élevant à de 30 % à 80 %, notamment à de 50 % à 60 % de la vitesse de rotation de préformage médiane.

8. Procédé selon l'une quelconque des revendications 4 à 7, l'au moins une étape de préformage étant réalisée dans au moins un dispositif de préformage (1^{I} 1^{II}, 1^{III}) et l'étape de formage final étant réalisée dans un dispositif de formage final (1^{IV}), notamment après l'au moins une étape de préformage, l'au moins un intermédiaire (9) en verre étant déplacé vers le dispositif de formage final (1^{IV}), notamment le déplacement de l'intermédiaire (9) en verre s'effectuant au moyen d'un dispositif de mise en prise (11), notamment en faisant tourner un carrousel (11), et / ou l'au moins un intermédiaire (9) en verre comportant au moins 2, notamment au moins 4, 8, 16 ou 32 intermédiaires (9) en verre, qui sont façonnés en parallèle sur au moins un dispositif de préformage (1^{I}, 1^{II}, 1^{III}) et sur au moins un dispositif de formage final (1^{IV}).

9. Procédé selon l'une quelconque des revendications 4 à 8, en contact de formage par roulage, dans l'au moins une étape de préformage et dans l'étape de formage final, l'au moins un rouleau de formage (25) étant mis en rotation à une vitesse de rotation de rouleau qui est commandée en fonction de la vitesse de rotation de l'intermédiaire et / ou en fonction du rayon de l'intermédiaire, notamment dans l'au moins une étape de préformage et dans l'étape de formage final, la vitesse de rotation de rouleau étant commandée de telle sorte, qu'en contact de formage par roulage, le rapport de la vitesse circonférentielle de l'au moins un rouleau de formage (25) et de l'intermédiaire (9) en verre se différencie de moins de 50 %, 30 %, 20%, 10 %, 5 % ou 1 %, entre l'étape de préformage et l'étape de formage final.

10. Procédé selon l'une quelconque des revendications précédentes, pendant le procédé, la vitesse de rotation d'admission et / ou la vitesse de rotation de rouleau étant commandée par l'intermédiaire d'un servomoteur (27, 69).
